# EUROPÄISCHE PATENTSCHRIFT

(11) **EP 2 459 619 B1**
(45) Veröffentlichungstag und Bekanntmachung des Hinweises auf die Patenterteilung: **05.06.2013**
(21) Anmeldenummer: 10742792.4
(22) Anmeldetag: 28.07.2010
(51) Int. Cl.: C08G 73/02, C08L 79/04, C08G 59/06, C08G 59/68, C08K 5/357, C08L 63/00, C08L 71/00

(54) **SCHLAGZÄHMODIFIZIERTE ZUSAMMENSETZUNGEN**
IMPACT RESISTANT MODIFIED COMPOSITIONS
COMPOSITIONS PRÉSENTANT UNE RÉSILIENCE MODIFIÉE

(30) Priorität: 29.07.2009 DE 102009028099
(43) Veröffentlichungstag der Anmeldung: 06.06.2012
(73) Patentinhaber: Henkel AG & Co. KGaA, 40589 Düsseldorf (DE)
(72) Erfinder: KREILING, Stefan, 69214 Eppelheim (DE); TADEN, Andreas, 40597 Düsseldorf (DE); SCHÖNFELD, Rainer, 40627 Düsseldorf (DE); MAI, Claudia, 40591 Düsseldorf (DE); KUX, Michael, 40789 Monheim (DE); KÜSTER, Harald, 40625 Düsseldorf (DE)
(86) Internationale Anmeldenummer: PCT/EP2010/060959
(87) Internationale Veröffentlichungsnummer: WO 2011/012648

(56) Entgegenhaltungen:
- WO-A1-2007/064801
- WO-A1-2009/115586
- WO-A2-2008/063611
- JP-A- 2005 239 827

## Beschreibung

Die vorliegende Erfindung betrifft eine polymerisierbare Zusammensetzung, enthaltend mindestens eine Benzoxazin-Verbindung und bestimmte oligomere oder polymere urethangruppenfreie Polyether-Verbindungen. Weitere Gegenstände der vorliegenden Erfindung sind Klebstoffe, Dichtstoffe oder Beschichtungen, welche die erfindungsgemäße polymerisierbare Zusammensetzung umfassen, sowie Polymerisationsprodukte der genannten Zusammensetzung.

Epoxid-basierte Harzsysteme werden seit langem erfolgreich in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet.

Benzoxazin-basierte Harzsysteme verfügen in der Regel über eine hohe Glasübergangstemperatur und eine hohe mechanische Festigkeit. Weiterhin zeichnen sich die genannten Materialien durch ihre guten elektrischen Eigenschaften und ihr positives Brandschutzverhalten aus.

Allgemein gilt, dass die Materialeigenschaften Benzoxazin-basierter Harzsysteme durch Zugabe anderer Harzkomponenten positiv beeinflusst werden können. In diesem Zusammenhang offenbaren die US-Patente 4607091, 5021484 und 5200452 Mischungen von Epoxidharzen und Benzoxazinharzen. Der Zusatz der Epoxidharze bewirkt, dass die Gesamtviskosität der jeweiligen Mischung deutlich reduziert wird, wodurch eine verbesserte Verarbeitbarkeit der jeweiligen Mischungen erreicht wird.

Ein genereller Nachteil Benzoxazin-basierter Harzsysteme liegt in ihren bruchmechanischen Eigenschaften. Nach dem Aushärten sind die Materialien oft sehr spröde und müssen für die meisten Anwendungen durch den Zusatz von Zähigkeitsvermittlern schlagzähmodifiziert werden.

Benzoxazin-basierte Harzsysteme mit verbesserter Schlagzähmodifizierung sind aus dem Stand der Technik bekannt. So beschreibt das US-Patent US 7157509 thermisch-härtbare Benzoxazin-basierte Zusammensetzungen, die Acrylnitril-Butadien-Copolymere als Zähigkeitsvermittler umfassen, wobei das genannte Copolymer über terminale sekundäre Aminogruppen verfügt.

Die internationale Patentanmeldung WO 2007/064801 lehrt eine härtbare Zusammensetzung, die Benzoxazin-basierte Harzsysteme und bestimmte Addukte als Zähigkeitsvermittler umfasst. Die genannten Addukte werden in zwei Schritten hergestellt. In einem ersten Schritt erfolgt die Umsetzung einer ersten Hydroxygruppen-haltigen Verbindung mit einer Isocyanatgruppen-haltigen Verbindung und einer phenolischen Verbindung, wobei ein urethangruppenhaltiges Reaktionsprodukt gebildet wird. In einem zweiten Schritt wird das urethangruppenhaltige Reaktionsprodukt mit Epoxid-haltigen Verbindungen weiter umgesetzt wird, wodurch die oben genannten Addukte als Zähigkeitsvermittler erhalten werden. Durch die zweistufige Reaktionsführung ist der in der WO 2007/064801 offenbarte Herstellungsprozess der Zähigkeitsvermittler insbesondere unter Kosten- und Effizienzgesichtspunkten als verbesserungsfähig anzusehen. Weiterhin ist es aus ökologischen Erwägungen heraus wünschenswert, den Einsatz von Isocyanaten bei der Herstellung der Zähigkeitsvermittler zu vermeiden.

Ziel der vorliegenden Erfindung war daher die Bereitstellung einer polymerisierbaren Zusammensetzung auf Benzoxazinbasis, die mindestens einen Zähigkeitsvermittler enthält, der in einem einfachen und kostengünstigen Verfahren aus leicht verfügbaren Rohstoffen ohne Verwendung von Isocyanaten hergestellt werden kann, wobei die polymerisierbare Zusammensetzung im ausgehärteten Zustand gegenüber dem Stand der Technik verbesserte bruchmechanische Eigenschaften aufweist.

Überraschenderweise wurde nun gefunden, dass polymerisierbare Zusammensetzungen, die mindestens eine Benzoxazin-Verbindung enthalten, durch den Zusatz von bestimmten oligomeren oder polymeren urethangruppenfreien Polyether-Verbindungen als Zähigkeitsvermittler in effektiver Weise schlagzähmodifiziert werden können, wodurch die polymerisierbaren Zusammensetzungen in ausgehärteter Form sehr gute bruchmechanische Eigenschaften aufweisen.

Ein erster Gegenstand der vorliegenden Erfindung ist daher eine polymerisierbare Zusammensetzung, umfassend
i) mindestens eine Benzoxazin-Verbindung und
ii) mindestens eine oligomere oder polymere urethangruppenfreie Polyether-Verbindung, umfassend ein oder mehrere Strukturelemente der allgemeinen Formel (I), 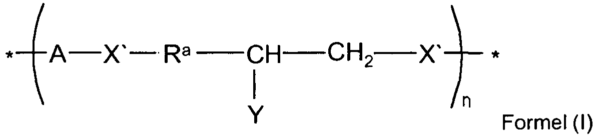 wobei n eine Zahl von 5 bis 10000 ist, jeder Rest R^{a} in jeder Wiederholungseinheit unabhängig voneinander für eine divalente Verbindungsgruppe steht, die 1 bis 100 C-Atome umfasst, jeder Rest X' in jeder Wiederholungseinheit unabhängig voneinander ausgewählt wird aus -O-, -S-, -NH- oder einer Carboxylgruppe der allgemeinen Form -(C=O)O-, wobei das C-Atom der Carboxylgruppe stets mit dem Rest A verbunden ist, jeder Rest Y in jeder Wiederholungseinheit unabhängig voneinander ausgewählt wird aus -OH, -SH und -NH₂ und jeder Rest A in jeder Wiederholungseinheit unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht, mit der Maßgabe, dass, bezogen auf die Gesamtanzahl aller Reste A in der oligomeren oder polymeren urethangruppenfreien Polyether-Verbindung, 20 bis 80% aller Reste A für K und 20 bis 80% aller Reste A für L stehen.

Ein weiterer Gegenstand der vorliegenden Erfindung ist eine polymerisierbare Zusammensetzung, umfassend
i) mindestens eine Benzoxazin-Verbindung und
ii) mindestens eine oligomere oder polymere urethangruppenfreie Polyether-Verbindung, herstellbar durch Umsetzung mindestens einer Komponente A mit mindestens einer Komponente B,
wobei Komponente A ausgewählt wird aus der Gruppe bestehend aus
(A-1) aromatischen Verbindungen mit mindestens zwei aromatischen Hydroxy-, Carboxyl-, Amino- oder Thiolgruppen und
(A-2) Polyethern mit mindestens zwei terminalen Hydroxy-, Carboxyl-, Amino- oder Thiolgruppen und Komponente B ausgewählt wird aus der Gruppe bestehend aus
(B-1) Polyethern mit mindestens zwei terminalen Oxiran-, Aziridin- oder Thiirangruppen und
(B-2) aromatischen Verbindungen der allgemeinen Formel (VIII) 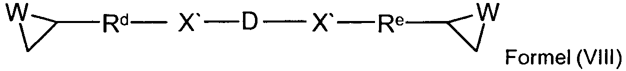 wobei jeder Rest R^{d} und R^{e} jeweils unabhängig voneinander für eine divalente Verbindungsgruppe steht, die 1 bis 100 C-Atome umfasst, jeder Rest X' unabhängig voneinander ausgewählt wird aus -O-, -S-, - NH- oder einer Carboxylgruppe der allgemeinen Form-(C=O)O-, wobei das C-Atom der Carboxylgruppe stets mit dem Rest D verbunden ist, W ausgewählt wird aus -O-, -S- oder -NH- und Rest D mindestens eine aromatische Gruppe umfasst,
   mit der Maßgabe, dass die alleinige Umsetzung von einer oder mehrerer Komponente(n), die der Definition von (A-1) genügen, mit einer oder mehrerer Komponente(n), die der Definition von (B-2) genügen und die alleinige Umsetzung von einer oder mehrerer Komponente, die der Definition von (A-2) genügen, mit einer oder mehrerer Komponenten, die der Definition von (B-1) genügen, ausgeschlossen ist.

Die polymerisierbaren Zusammensetzungen der vorliegenden Erfindung eignen sich im besonderen Maße zur Herstellung von Klebstoffen, Dichtstoffen oder Beschichtungsmitteln, sowie zur Herstellung von Verbundwerkstoffen, die eine Schicht oder ein Bündel von Fasern, wie beispielsweise Kohlefasern, umfassen.

Daher sind Klebstoffe, Dichtstoffe oder Beschichtungsmittel, welche die erfindungsgemäße polymerisierbare Zusammensetzung umfassen, ebenso Gegenstand der vorliegenden Erfindung wie das Polymerisationsprodukt der jeweiligen erfindungsgemäßen Zusammensetzung, wobei das genannte Polymerisationsprodukt mit einer Schicht oder einem Bündel von Fasern, wie beispielsweise Kohlefasern, in Kontakt stehen kann.

Ein weiterer Gegenstand der vorliegenden Erfindung ist die Verwendung einer oder mehrerer der vorgenannten oligomeren oder polymeren urtehangruppenfreien Polyether-Verbindungen als Schlagzähmodifizierungsmittel für ein Polymerisationsprodukt, das mindestens eine polymerisierbare Benzoxazin-Verbindung in polymerisierter Form enthält.

Die Benzoxazin-Verbindung der vorliegenden Erfindung ist ein Monomer, Oligomer oder Polymer, das zumindest eine Benzoxazingruppe umfasst. Bevorzugte Monomere können vorzugsweise bis zu vier Benzoxazingruppen umfassen, wobei sowohl einzelne Monomere als auch Mischungen von zwei oder mehr Monomeren als Benzoxazin-Verbindung verwendet werden können.

Im Folgenden sind einige polymerisierbare Benzoxazin-Verbindungen aufgeführt, die bis zu vier Benzoxazingruppen umfassen.

Geeignete Benzoxazin-Verbindungen werden vorzugsweise durch Formel (B-I) beschrieben, 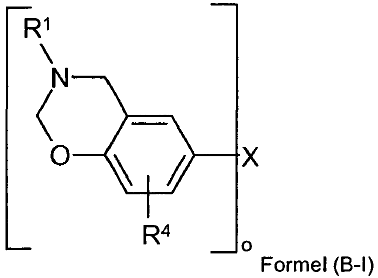 wobei o eine ganze Zahl zwischen 1 und 4 ist, X ausgewählt wird aus der Gruppe bestehend aus Alkyl (für o = 1 ), Alkylen (für o = 2 bis 4), Sauerstoff (für o = 2), Thiol (für o = 1 ), Schwefel (für o = 2), Sulfoxid (für o = 2), Sulfon (für o = 2) und einer direkten, kovalenten Bindung (für o = 2), R¹ ausgewählt wird aus der Gruppe bestehend aus Wasserstoff, Alkyl, Alkenyl und Aryl und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Besonders bevorzugte Strukturen gemäß Formel (B-I) werden durch Formel (B-II) repräsentiert, 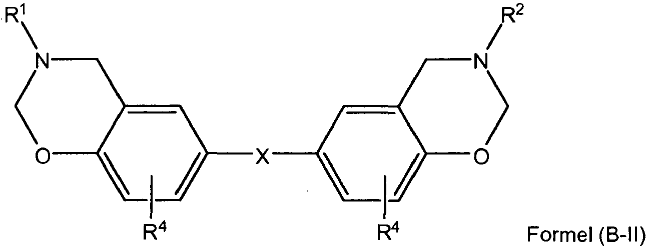 wobei X ausgewählt wird aus der Gruppe bestehend aus CH₂, C(CH₃)₂, C=O, O, S, S=O, O=S=O und einer direkten, kovalenten Bindung, R¹ und R² gleich oder verschieden sind und jeweils ausgewählt werden aus der Gruppe bestehend aus Wasserstoff, Alkyl, insbesondere Methyl, Ethyl, n-Propyl, i-Propyl, n-Butyl oder i-Butyl, Alkenyl, insbesondere Allyl, und Aryl und die Substituenten R⁴ gleich oder verschieden sind und jeweils ausgewählt werden aus der Gruppe bestehend aus Wasserstoff, Halogen, Alkyl und Alkenyl, oder R⁴ jeweils ein divalenter Rest ist, der aus der Benzoxazin-Struktur eine entsprechende Naphthoxazin-Struktur macht.

Bevorzugte Benzoxazin-Verbindungen gemäß Formel (B-II) sind beispielsweise Benzoxazin-Verbindungen gemäß Formel (B-III) bis (B-VI), 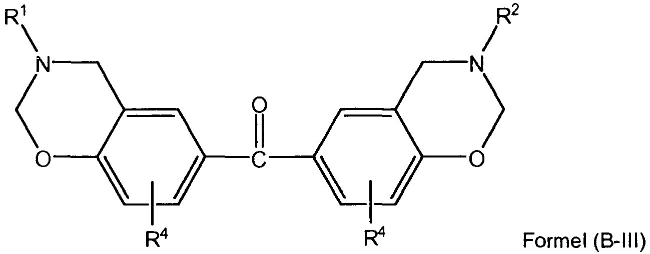 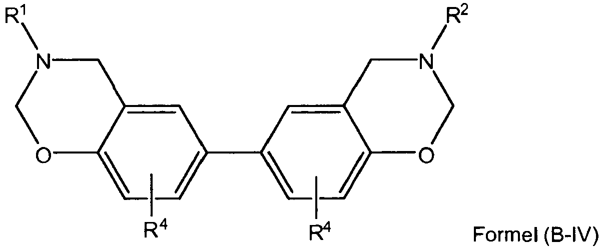 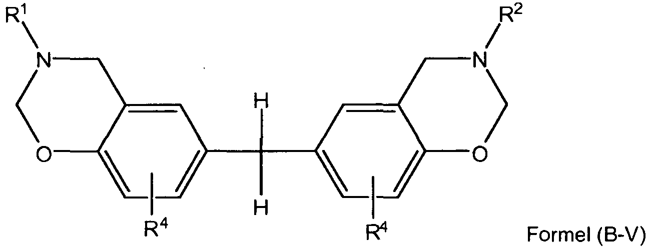 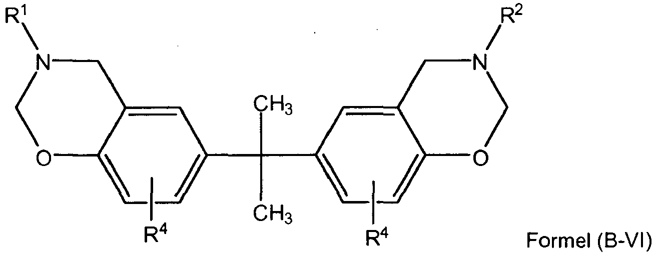 wobei R¹, R² und R⁴ wie in Formel (B-I) und/oder (B-II) definiert sind.

Bevorzugte Benzoxazin-Verbindungen sind weiterhin Verbindungen der allgemeinen Formel (B-VII), 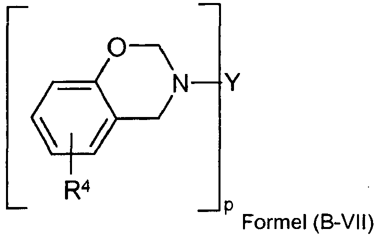 wobei p = 2 ist und Y ausgewählt wird aus der Gruppe bestehend aus Biphenyl, Diphenylmethan, Diphenylisopropan, Diphenylsulfid, Diphenylsulfoxid, Diphenylsulfon, Diphenylketon und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Ebenfalls bevorzugte Benzoxazin-Verbindungen sind weiterhin Verbindungen der allgemeinen Formel (B-VIII) bis (B-X), 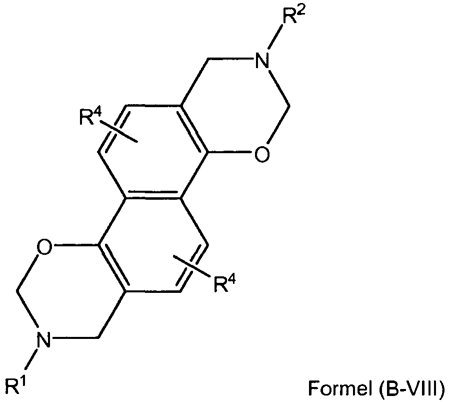 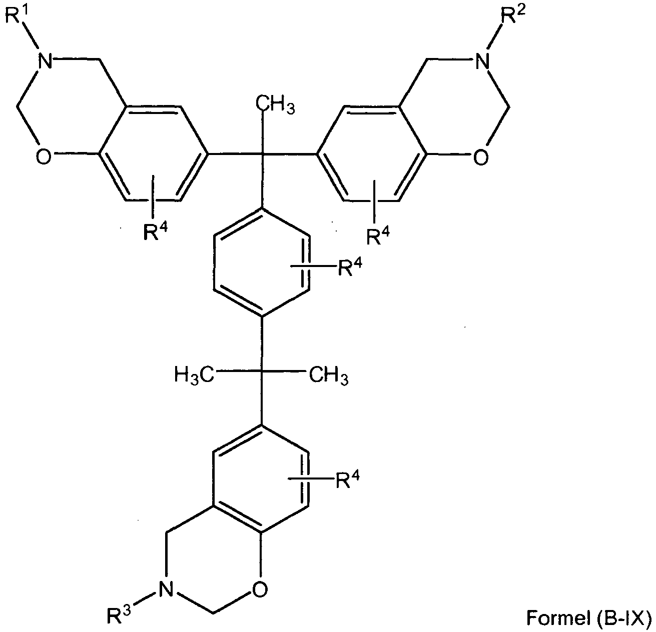 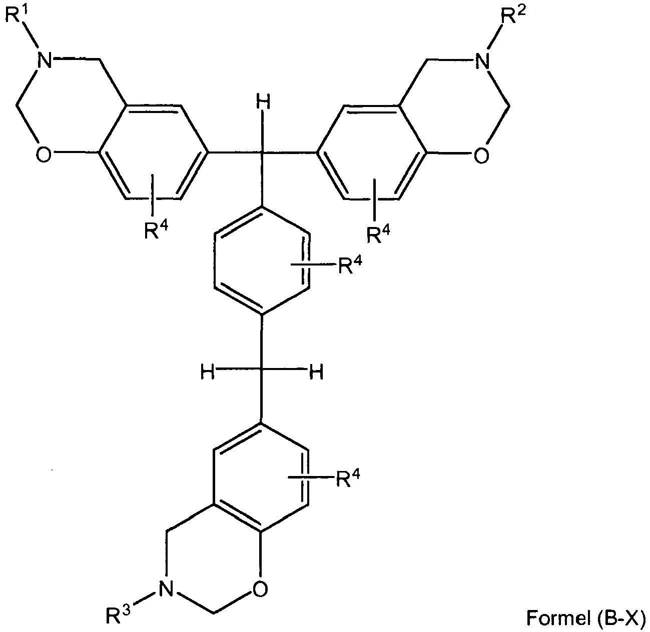 wobei R¹, R² und R⁴ wie in Formel (B-I) und/oder (B-II) definiert sind und R³ wie R¹ oder R² definiert ist.

Geeignete Benzoxazin-Verbindungen im Sinne der vorliegenden Erfindung sind beispielsweise die folgenden Verbindungen:

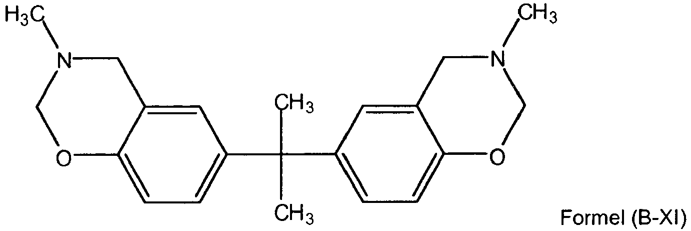

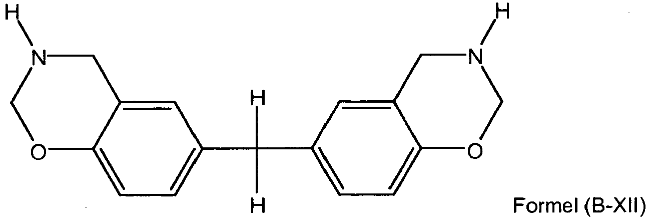

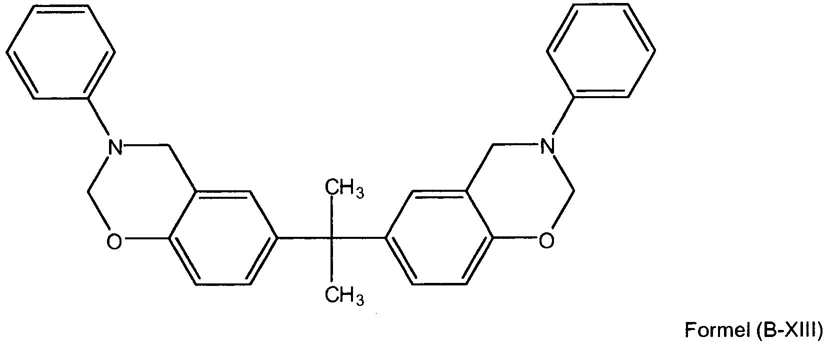

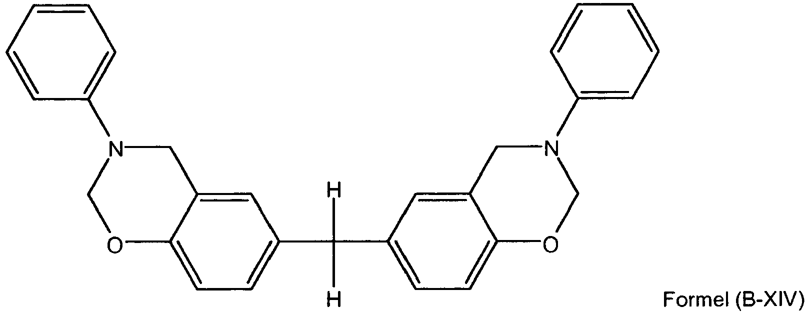

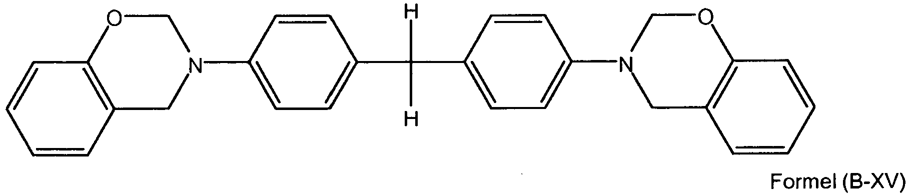

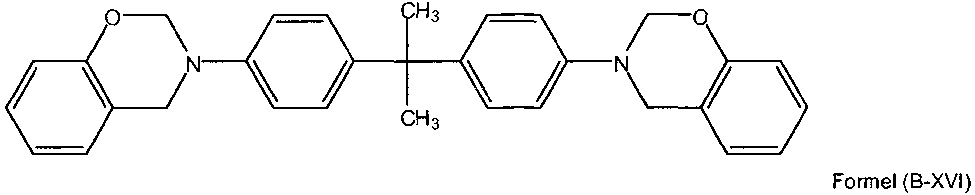

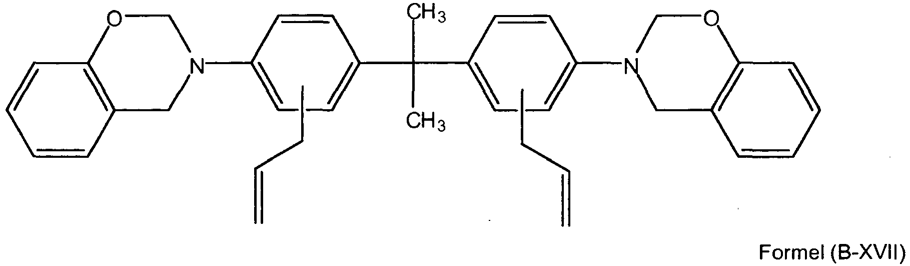

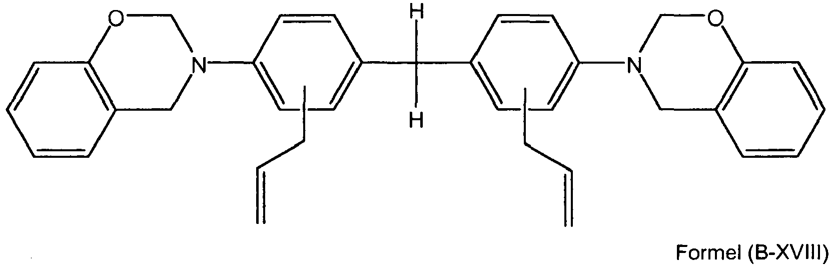

Eine weitere Benzoxazin-Verbindung, die im Rahmen der vorliegenden Erfindung verwendet werden kann, wird ausgewählt aus Verbindungen der Formel (B-XIX), 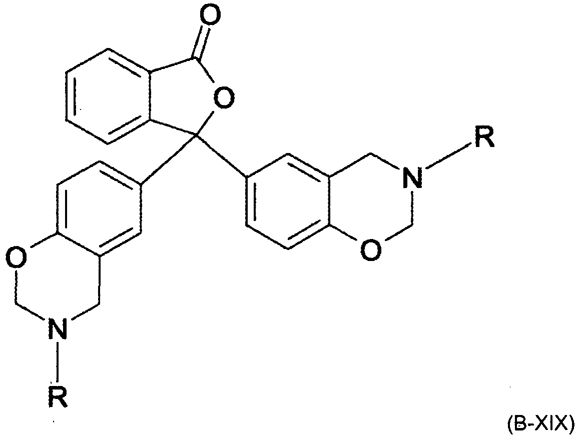 wobei jedes R in Formel (XIX) unabhängig voneinander ausgewählt wird aus Allyl, Aryl, C1-C8 Alkyl und C3-C8 Cycloalkyl.

Die vorgenannten Gruppen können substituiert oder unsubstituiert vorliegen, wobei geeignete Substituenten beispielsweise ausgewählt werden aus Amino, Allyl und C1-C8 Alkyl.
Vorzugsweise sind alle Reste R in Formel (XIX) identisch, wobei R insbesondere für eine Phenylgruppe steht.

Geeignete Benzoxazin-Verbindungen im Sinne der vorliegenden Erfindung sind sowohl monofunktionelle als auch multifunktionelle Benzoxazin-Verbindungen. Unter monofunktionellen Benzoxazin-Verbindungen sind solche Verbindungen zu verstehen, die nur eine Benzoxazingruppe umfassen, während multifunktionelle Benzoxazin-Verbindungen mehr als eine Benzoxazingruppe umfassen und vorzugsweise bis zur vier Benzoxazingruppen enthalten können.

Beispielhaft können monofunktionelle Benzoxazin-Verbindungen durch die allgemeine Formel (XIX) beschrieben werden, 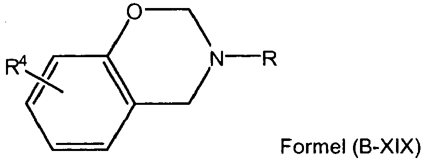 wobei R in Formel (BXIX) ausgewählt wird aus der Gruppe bestehend aus Alkyl, insbesondere Methyl, Ethyl, n-Propyl, i-Propyl, n-Butyl, i-Butyl, Alkenyl, insbesondere Allyl, und Aryl, wobei jede der genannten Gruppen gegebenenfalls substituiert ist und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Bevorzugte monofunktionelle Benzoxazin-Verbindungen werden beispielsweise durch die allgemeine Formel (B-XX) beschrieben, 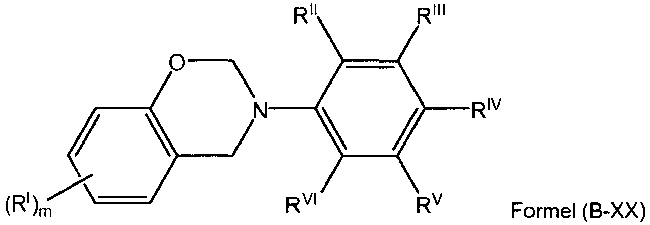 wobei R' ausgewählt wird aus der Gruppe bestehend aus Alkyl und Alkenyl, wobei jede der genannten Reste gegebenenfalls substituiert oder unterbrochen ist von einem oder mehreren O, N, S, C=O, COO oder NHC=O oder einer oder mehrerer Arylgruppen, m eine ganze Zahl zwischen 0 und 4 ist und R^{II}, R^{III}, R^{IV}, R^{V} und R^{VI} unabhängig voneinander ausgewählt werden aus der Gruppe bestehend aus Wasserstoff, Alkyl und Alkenyl, wobei jede Alkyl- oder Alkenylgruppe gegebenenfalls substituiert oder unterbrochen ist von einem oder mehreren O, N, S, C=O, COO, oder NHC=O oder einer oder mehrerer Arylgruppen.

Geeignete monofunktionelle Benzoxazin-Verbindungen im Sinne der vorliegenden Erfindung sind beispielsweise die folgenden Verbindungen (B-XXI) und (B-XXII), 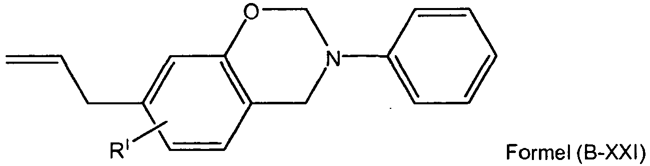 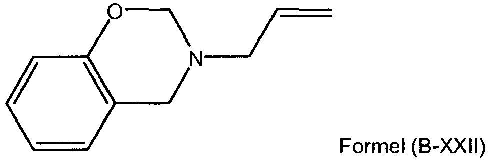 wobei R' wie in Formel (B-XX) definiert ist.

Benzoxazin-Verbindungen im Sinne der vorliegenden Erfindung sind kommerziell erhältlich und werden u.a. von Huntsman Advanced Materials; Georgia-Pacific Resins, Inc. und Shikoku Chemicals Corporation, Chiba, Japan vertrieben.

Ungeachtet dessen können die erfindungsgemäßen Benzoxazin-Verbindungen der vorliegenden Erfindung auch durch Umsetzung einer phenolischen Verbindung, etwa Bisphenol A, Bisphenol F, Bisphenol S oder Thiophenol mit einem Aldehyd, etwa Formaldehyd, in Gegenwart eines primären Alkyl- oder Arylamins erhalten werden. Geeignete Herstellverfahren werden beispielsweise im US-Patent 5543516, insbesondere in den Beispielen 1 bis 19 in den Spalten 10 bis 14 offenbart, wobei die Reaktionszeit der entsprechenden Umsetzung je nach Konzentration, Reaktivität und Reaktionstemperatur von einigen Minuten bis zu einigen Stunden dauern kann. Weitere Herstellungsmöglichkeiten der erfindungsgemäßen Benzoxazin-Verbindungen der vorliegenden Erfindung können den US-Patenten 4607091, 5021484 und 5200452 und der internationalen Patentanmeldung WO 2006/035021 A1 entnommen werden.

In einer bevorzugten Ausführungsform der Erfindung enthält die polymerisierbare Zusammensetzung mindestens eine polymerisierbare Benzoxazin-Verbindung oder eine Mischung verschiedener polymerisierbarer Benzoxazin-Verbindungen in Mengen von 20 bis 90 Gew.-%, vorzugsweise von 30 bis 80 Gew.-% und überaus bevorzugt von 50 bis 70 Gew.-%, jeweils bezogen auf die Gesamtmenge der Zubereitung.

Die erfindungsgemäße polymerisierbare Zusammensetzung umfasst weiterhin mindestens eine der vorgenannten oligomeren oder polymeren urethangruppenfreien Polyether-Verbindungen.

Unter einer "Polyether-Verbindung" werden im Sinne der vorliegenden Erfindung Verbindungen verstanden, die vier oder mehr als vier Ether-Verknüpfungen enthalten.

Oligomere Polyether-Verbindungen enthalten dabei 4 bis 20 Ether-Verknüpfungen, während polymere Polyether-Verbindungen mehr als 20 Ether-Verknüpfungen umfassen.

Unter dem Begriff "urethangruppenfreie Polyether-Verbindung" werden im Sinne der vorliegenden Erfindung oligomere oder polymere Polyether-Verbindungen verstanden deren Polymerketten im Wesentlichen frei von Urethangruppen (-NH-CO-O-) sind. Im "Wesentlichen frei" bedeutet, dass der Anteil der Urethangruppen am Molekulargewicht eines Moleküls der oligomeren oder polymeren Polyether-Verbindung weniger als 0,5%, vorzugsweise weniger als 0,25% und besonders bevorzugt weniger als 0,1% beträgt.
In einer bevorzugten Ausführungsform der Erfindung ist die oligomere oder polymere Polyether-Verbindung vollkommen frei von Urethangruppen, so dass der Anteil der Urethangruppen am Molekulargewicht jedes Moleküls der oligomeren oder polymeren Polyether-Verbindung 0% beträgt.

Urethangruppen in einer Polymerkette werden in der Regel durch die Umsetzung eines Alkohols mit einem Isocyanat gebildet. Durch die erfindungsgemäße Verwendung der urethangruppenfreien Polyether-Verbindungen als Schlagzähmodifizierungsmittel kann bei deren Herstellung im Wesentlichen auf die Verwendung von Isocyanat-haltigen Verbindungen verzichtet werden. Darüber hinaus weisen die erfindungsgemäßen polymerisierbaren Zusammensetzungen, die als Zähigkeitsvermittler urethangruppenfreie Polyether-Verbindungen enthalten, gegenüber vergleichbaren Zusammensetzungen mit Urethangruppen-haltigen Polyether-Verbindungen eine deutlich reduzierte Viskosität auf.

Somit bleibt die Viskosität der erfindungsgemäßen polymerisierbaren Zusammensetzungen niedrig, selbst wenn höhere Mengen an urethangruppenfreien Polyether-Verbindungen als Schlagzähmodifizierungsmittel verwendet werden.

In einer bevorzugten Ausführungsform weist die oligomere oder polymere urethangruppenfreie Polyether-Verbindung der vorliegenden Erfindung mindestens eine terminale Hydroxy-, Carboxyl-, Amino- oder Thiolgruppe, vorzugsweise mindestens eine terminale Hydroxygruppe und/oder mindestens eine terminale Oxiran-, Aziridin- oder Thiirangruppe, vorzugsweise mindestens eine terminale Oxirangruppe, auf. Insbesondere werden alle terminalen Gruppen der oligomeren oder polymeren urethangruppenfreien Polyether-Verbindung der vorliegenden Erfindung ausgewählt aus Hydroxy-, Carboxyl-, Amino-, Thiol-, Oxiran-, Aziridin- und/oder Thiirangruppen, besonders bevorzugt aus Hydroxy- und/oder Oxirangruppen.

Die terminalen Gruppen können während der Härtung der polymerisierbaren Zusammensetzung mit der Benzoxazin-Verbindung unter Ausbildung einer kovalenten Bindung reagieren, wodurch eine besonders effektive Anbindung des jeweiligen Zähigkeitsvermittlers an die Harzmatrix gelingt. Auf diese Weise wird eine verbesserte Schlagzähmodifizierung der ausgehärteten erfindungsgemäßen polymerisierbaren Zusammensetzung erreicht.

Bevorzugte oligomere oder polymere urethangruppenfreie Polyether-Verbindung weisen ein gewichtsmittleres Molekulargewicht von 1000 bis 100000 g/mol, vorzugsweise von 2000 bis 8000 g/mol und besonders bevorzugt von 3000 bis 5000 g/mol auf.

Oligomere oder polymere urethangruppenfreie Polyether-Verbindung mit einem geringeren gewichtsmittleren Molekulargewicht als 1000 g/mol können in der Harzmatrix als Weichmacher wirken, wodurch Polymerisationsprodukte erhalten werden, die aufgrund ihrer bruchmechanischen Eigenschaften und ihrer vergleichsweise niedrigeren Biegemoduli für die meisten Anwendungszwecke, insbesondere in Verbundwerkstoffen, ungeeignet sind.

Oligomere oder polymere urethangruppenfreie Polyether-Verbindung mit einem höheren gewichtsmittleren Molekulargewicht als 100000 g/mol zeigen in der Regel eine sehr hohe Viskosität. Es ist daher möglich, dass die vorgenannten Polyether-Verbindungen eine vergleichsweise schlechte Verträglichkeit mit der Harzmatrix aufweisen.

Die oligomere oder polymere urethangruppenfreie Polyether-Verbindung der vorliegenden Erfindung umfasst ein oder mehrere Strukturelemente der allgemeinen Formel (I), 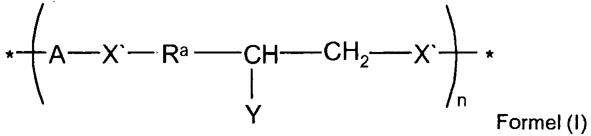 wobei n eine Zahl von 5 bis 10000 ist, jeder Rest R^{a} in jeder Wiederholungseinheit unabhängig voneinander für eine divalente Verbindungsgruppe steht, die 1 bis 100 C-Atome umfasst, jeder Rest X' in jeder Wiederholungseinheit unabhängig voneinander ausgewählt wird aus -O-, -S-, -NH- oder einer Carboxylgruppe der allgemeinen Form -(C=O)O-, wobei das C-Atom der Carboxylgruppe stets mit dem Rest A verbunden ist, jeder Rest Y in jeder Wiederholungseinheit unabhängig voneinander ausgewählt wird aus -OH, -SH und -NH₂ und jeder Rest A in jeder Wiederholungseinheit unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht,
mit der Maßgabe, dass, bezogen auf die Gesamtanzahl aller Reste A in der oligomeren oder polymeren urethangruppenfreien Polyether-Verbindung, 20 bis 80% aller Reste A für K und 20 bis 80% aller Reste A für L stehen.

Der divalente Rest K wird formal durch das Entfernen zweier Hydroxygruppen in aromatischen Dihydroxyverbindungen erhalten. Unter aromatischen Dihydroxyverbindungen werden im Sinne der vorliegenden Erfindung alle Verbindungen verstanden, die zwei Hydroxygruppen umfassen, wobei jede Hydroxygruppe kovalent an ein C-Atom eines aromatischen bzw. heteroaromatischen Ringsystems gebunden ist.

Die beiden Hydroxygruppen können dabei sowohl mit demselben oder mit zwei verschiedenen aromatischen bzw. heteroaromatischen Ringsystemen verbunden sein.

Der divalente Rest L wird formal durch das Entfernen zweier terminaler Hydroxygruppen in Polyethern erhalten. Rest L umfasst somit alle divalenten Gruppen, welche die oben beschriebene chemische Struktur aufweisen. Dabei ist offensichtlich, dass die chemische Struktur des Rests L formal auch auf vielen anderen Wegen realisiert werden kann, beispielsweise durch das Entfernen zweier terminaler Aminogruppen in Amino-terminierten Polyethern. Auch solche Reste fallen selbstverständlich unter die oben getroffene Definition des Restes L.

Vorzugsweise wird der divalente Rest L formal durch das Entfernen zweier terminaler Hydroxygruppen in "nicht-aromatische Polyethern" erhalten, wobei unter dem Begriff "nicht-aromatische Polyether" im Sinne der vorliegenden Erfindung Polyether zu verstehen sind, die kein aromatisches Strukturelement umfassen.

In einer weiteren bevorzugten Ausführungsform der Erfindung wird der divalente Rest L formal durch das Entfernen zweier terminaler Hydroxygruppen in Polyalkylenoxiden erhalten, wobei nicht-aromatische Polyalkylenoxide besonders bevorzugt sind.

Die oligomeren oder polymeren urethangruppenfreien Polyether-Verbindungen, die als Rest L von nicht-aromatischen Polyethern und/oder Polyalkylenoxiden abgeleitete Strukturelemente umfassen, zeigen eine besonders gute Wirkung als Schlagzähmodifizierungsmittel.

Für den Fall, dass die oligomere oder polymere urethangruppenfreie Polyether-Verbindung mehrere Strukturelemente der der allgemeinen Formel (I) umfasst, können die genannten Strukturelemente gleich oder verschieden sein und durch eine oder mehrere beliebige Verbindungsgruppen miteinander verbunden werden. Die jeweiligen Verbindungsgruppen sind dabei gleich oder verschieden und werden vorzugsweise ausgewählt aus kovalenten Bindungen und linearen oder verzweigten di-, tri-, tetra-, penta- oder multivalenten Gruppen, die jeweils 1 bis 100 C-Atome umfassen.

Vorzugsweise werden die vorgenannten Verbindungsgruppen ausgewählt aus C1-22-Alkylen, insbesondere C6-22-Alkylen, C2-22-Alkenylen, insbesondere C6-22-Alkenylen, C2-22-Alkinylen, insbesondere C6-22-Alkinylen, C5-8-Cycloalkylen, C3-22 Heteroalkylen, C4-22 Heterocycloalkylen, C6-14-Arylen und C6-14-Heteroarylen.

Alle vorgenannten Verbindungsgruppen können jeweils unabhängig voneinander ein- oder mehrfach, insbesondere ein-, zwei- oder dreifach, vorzugsweise einfach, substituiert sein, insbesondere durch Substituenten ausgewählt aus Halogen, insbesondere Chlor, Brom oder Fluor, Trifluormethyl, C1-18-Alkyl, C3-8-Cycloalkyl, C2-18-Alkenyl, C2-18-Alkinyl, Heteroalkyl, Heterocycloalkyl, C1-18-Alkoxy, C1-18-Alkylsulfanyl, C1-18-Alkylsulfonyl, C1-18-Alkylsulfoxidyl, C1-18-Alkanoyl, C1-18-Alkanoyloxy, C1-18-Alkoxycarbonyl, C1-18-Alkylaminocarbonyl, C1-18-Alkylsulfanylcarbonyl, Sulfanyl, Cyan, Amino, Heteroaryl, Heteroaryl-C1-12-alkyl, Heteroaryloxy, Heteroarylamino, Heteroarylsulfanyl, Heteroarylsulfonyl, Heteroarylsulfoxidyl, Heteroarylcarbonyl, Heteroarylcarbonyloxy, Heteroaryloxycarbonyl, Heteroarylaminocarbonyl, Heteroarylsulfanylcarbonyl, C1-18-Alkoxysulfonyl, C1-18-Alkoxycarbinol, Sulfo, Sulfino, Sulfeno, Formyl, Thioformyl, bevorzugt durch Halogen, C1-18-Alkyl, C2-18-Alkenyl, C2-18-Alkinyl und C1-18-Alkoxy.

In einer bevorzugten Ausführungsform beträgt der Anteil des Rests K an der Gesamtanzahl aller Reste A in der oligomeren oder polymeren urethangruppenfreien Polyether-Verbindung 30 bis 70%, vorzugsweise 40 bis 60% und insbesondere 45 bis 55%. Oligomere oder polymere urethangruppenfreie Polyether-Verbindung mit den vorgenannten Anteilen an Resten K weisen eine besonders gute Verträglichkeit mit der Benzoxazinharzmatrix auf.

In einer weiteren bevorzugten Ausführungsform beträgt der Anteil des Rests L an der Gesamtanzahl aller Reste A in der oligomeren oder polymeren urethangruppenfreien Polyether-Verbindung 30 bis 70%, vorzugsweise 40 bis 60% und insbesondere 45 bis 55%. Oligomere oder polymere urethangruppenfreie Polyether-Verbindung mit den vorgenannten Anteilen an Resten L zeigen eine vergleichsweise niedrigere Glasübergangstemperatur Tg und eine reduzierte Viskosität, wodurch polymerisierbare Zusammensetzungen erhalten werden, die eine besonders gute Verarbeitbarkeit aufweisen.

Durch die geeignete Wahl der prozentualen Anteile der Reste K und L kann die Verträglichkeit, die Viskosität und die Glasübergangstemperatur der oligomeren oder polymeren urethangruppenfreien Polyether-Verbindung genau eingestellt werden.

Durch die prozentualen Verhältnisse der Reste K und L in der oligomeren oder polymeren urethangruppenfreien Polyether-Verbindung kann in Abhängigkeit von der verwendeten Benzoxazin-Verbindung oder der verwendeten Mischung verschiedener Benzoxazin-Verbindungen weiterhin die Schlagzähigkeit, die Biegeeigenschaften und die nach der Aushärtung gebildete Mikrostruktur der erfindungsgemäßen Polymerisationsprodukte gezielt gesteuert werden.

Im Rahmen der Erfindung sind insbesondere solche oligomeren oder polymeren urethangruppenfreien Polyether-Verbindungen bevorzugt, in denen der Anteil aller Strukturelemente der Formel (I) am gewichtsmittleren Molekulargewicht der oligomeren oder polymeren urethangruppenfreien Polyether-Verbindung 40 bis 99,99 %, vorzugsweise 70 bis 99 % und insbesondere 85 bis 98 % beträgt.

Oligomere oder polymere urethangruppenfreie Polyether-Verbindung mit den vorgenannten Anteilen an Strukturelementen der Formel (I) erlauben eine besonders effektive Schlagzähmodifizierung der ausgehärteten erfindungsgemäßen polymerisierbaren Zusammensetzungen.

Die einzelnen Strukturelemente der allgemeinen Formel (I) können dabei so angeordnet bzw. verknüpft sein, dass sie eine lineare oligomere oder polymere urethangruppenfreie Polyether-Verbindung der vorliegenden Erfindung bilden und/oder Bestandteil einer solchen Verbindung sind.

Alternativ dazu können die einzelnen Strukturelemente der allgemeinen Formel (I) so angeordnet bzw. verknüpft sein, dass sie eine verzweigte oligomere oder polymere urethangruppenfreie Polyether-Verbindung der vorliegenden Erfindung bilden und/oder Bestandteil einer solchen Verbindung sind.

Bevorzugte oligomere oder polymere urethangruppenfreie Polyether-Verbindungen werden im Rahmen der vorliegenden Erfindung ausgewählt aus Verbindungen der allgemeinen Formel (II), 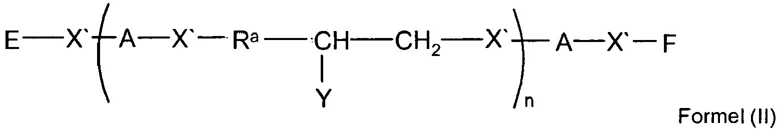 wobei E ausgewählt wird aus Wasserstoff oder Resten der allgemeinen Formel (III), 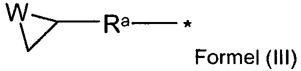 F ausgewählt wird aus Wasserstoff oder Resten der allgemeinen Formel (IV), 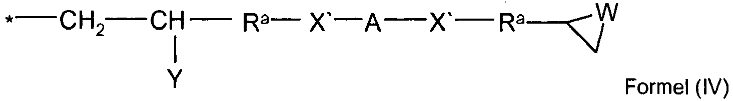 wobei jeder Rest W in Formel (III) und (IV) unabhängig voneinander ausgewählt wird aus -O-, -S- oder -NH-, wobei W insbesondere für -O- steht, n eine Zahl von 5 bis 10000 ist, jeder Rest R^{a} in jeder Wiederholungseinheit und in Formel (II), (III) und (IV) unabhängig voneinander für eine divalente Verbindungsgruppe steht, die 1 bis 100 C-Atome umfasst, jeder Rest X' in jeder Wiederholungseinheit und in Formel (II) und (IV) unabhängig voneinander ausgewählt wird aus -O-, -S-, -NH- oder einer Carboxylgruppe der allgemeinen Form -(C=O)O-, wobei das C-Atom der Carboxylgruppe stets mit dem Rest A verbunden ist, jeder Rest Y in jeder Wiederholungseinheit und in Formel (IV) unabhängig voneinander ausgewählt wird aus -OH, -SH und -NH₂ und jeder Rest A in jeder Wiederholungseinheit und in Formel (IV) unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht,
wobei, bezogen auf die Gesamtanzahl aller Reste A in der oligomeren oder polymeren urethangruppenfreien Polyether-Verbindung, 20 bis 80% aller Reste A für K und 20 bis 80% aller Reste A für L stehen.

Durch die Anzahl der Wiederholungseinheiten können die Eigenschaften der urethangruppenfreien Polyether-Verbindung verändert werden, wodurch es möglich ist, die vorgenannten Polyether gezielt an eine bestimmte Benzoxazinmatrix anzupassen. Vorzugsweise steht n in Formel (I) und (II) daher für eine Zahl von 3 bis 20, besonders bevorzugt für eine Zahl von 5 bis 15 und überaus bevorzugt für eine Zahl von 7 bis 10.

In bevorzugten Ausführungsformen der vorliegenden Erfindung wird jeder Rest R^{a} in Formel (I), (II), (III) und/oder (IV) unabhängig voneinander ausgewählt aus Alkylengruppen, die 1 bis 10 C-Atome umfassen. Insbesondere wird R^{a} aus linearen Alkylengruppen ausgewählt, die 1 bis 6, insbesondere 1 oder 2 Kohlenstoffatome umfassen, wie beispielsweise Methylen-, und Ethylengruppen, wobei R^{a} in den oben genannten Formeln besonders bevorzugt für eine Methylengruppe steht.

In einer weiteren bevorzugten Ausführungsformen der vorliegenden Erfindung steht jeder Rest X' in Formel (I), (II) und/oder (IV) unabhängig voneinander für -O-. Dies kann insbesondere dadurch erreicht werden, dass bei der Herstellung der urethangruppenfreien Polyether-Verbindungen der vorliegenden Erfindung aromatische Substanzen mit mindestens zwei aromatischen Hydroxygruppen und/oder Polyether mit mindestens zwei terminalen Hydroxygruppen verwendet werden. Die Verwendung der vorgenannten Substanzen ist vorteilhaft, da diese kostengünstig herstellbar oder kommerziell in einer großen Strukturvielfalt verfügbar sind.

Weiterhin ist es bevorzugt, dass der Rest Y in Formel (I), (II) und/oder (IV) für-OH steht. Dies kann insbesondere dadurch erreicht werden, dass bei der Herstellung der urethangruppenfreien Polyether-Verbindungen der vorliegenden Erfindung Substanzen mit terminalen Oxirangruppen verwendet werden. Die Verwendung der vorgenannten Substanzen ist vorteilhaft, da diese kostengünstig herstellbar und kommerziell in einer großen Strukturvielfalt verfügbar sind.

Der divalente Rest K wird formal durch das Entfernen zweier Hydroxygruppen in aromatischen Dihydroxyverbindungen erhalten. Bevorzugte Reste K werden dabei in jeder Wiederholungseinheit und in jeder der Formeln (I), (II) und ggf. (IV) unabhängig voneinander ausgewählt aus divalenten Resten der allgemeinen Formel (V) und/oder Formel (VI), 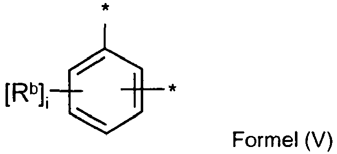 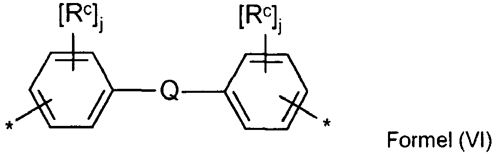 wobei Q ausgewählt wird aus Alkylen, Sauerstoff, Schwefel, Sulfoxid, Sulfon und einer direkten, kovalenten Bindung und i und j unabhängig voneinander für eine Zahl von 0 bis 4 stehen, insbesondere für 0 oder 1 stehen.

Sofern vorhanden, werden die Reste R^{b} und R^{c}, die jeweils ein Wasserstoffatom des aromatischen Ringsystems ersetzen, unabhängig voneinander ausgewählt aus Halogen, insbesondere Fluor, Chlor, Brom oder lod, C1-40 Alkyl, etwa Methyl, Ethyl, Isopropyl, C2-40 Alkenyl, C1-40 Alkoxyl und C7-13 Aralkyl. Rest R^{b} in Formel (V) kann auch ein divalenter Rest sein, der aus der Phenylgruppe eine entsprechende Naphthylgruppe macht. In bestimmten Ausführungsformen der vorliegenden Erfindung können die Reste R^{b} und R^{c}, sofern vorhanden, mindestens ein weiteres Strukturelement der allgemeinen Formel (I) umfassen.

Unter einer "Alkylengruppe Q" werden im Rahmen der vorliegenden Erfindung divalente Alkylreste verstanden, d.h. Alkyle, die an beiden Seiten noch eine Bindung eingehen können. Bevorzugte Alkylenreste sind beispielsweise substituierte oder unsubstituierte, gesättigte oder ungesättigte Alkylenreste mit 1 bis 40 C-Atomen. Bevorzugte Verbindungen sind ausgewählt aus beispielsweise -CH₂-(Methylen), -CH₂-CH₂-(Ethylen), -CH₂-CH₂-CH₂-(Propylen), -CH₂-CH₂-CH₂-CH₂- (Butylen), -CH₂-CH₂-CH₂-CH₂-CH₂-(Hexylen), -CH₂-CH₂-CH₂-CH₂-CH₂-CH₂- (Heptylen), -CH₂-CH₂-CH₂-CH₂-CH₂-CH₂-CH₂-CH₂- (Octylen), aber auch die verzweigten Derivate davon, wie iso-Propylen, tert-Butylen.

Die Alkylengruppe Q kann einfach oder mehrfach substituiert vorliegen. Geeignete Substituenten können beispielsweise ausgewählt werden aus Halogen, insbesondere Chlor, Brom oder Fluor, Trifluormethyl, C1-18-Alkyl, C3-8-Cycloalkyl, C2-18-Alkenyl, C2-18-Alkinyl, Heteroalkyl, Heterocycloalkyl, C1-18-Alkoxy, C1-18-Alkylsulfanyl, C1-18-Alkylsulfonyl, C1-18-Alkylsulfoxidyl, C1-18-Alkanoyl, C1-18-Alkanoyloxy, C1-18-Alkoxycarbonyl, C1-18-Alkylaminocarbonyl, C1-18-Alkylsulfanylcarbonyl, Sulfanyl, Cyan, Heteroaryl, Heteroaryl-C1-12-alkyl, Heteroaryloxy, Heteroarylamino, Heteroarylsulfanyl, Heteroarylsulfonyl, Heteroarylsulfoxidyl, Heteroarylcarbonyl, Heteroarylcarbonyloxy, Heteroaryloxycarbonyl, Heteroarylaminocarbonyl, Heteroarylsulfanylcarbonyl, C1-18-Alkoxysulfonyl, C1-18-Alkoxycarbinol, Sulfo, Sulfino, Sulfeno, Formyl, Thioformyl, bevorzugt durch Halogen, C1-18-Alkyl, C2-18-Alkenyl, C2-18-Alkinyl und C1-18-Alkoxy.

Geeignete kommerziell verfügbare aromatische Dihydroxyverbindungen, aus denen der divalente Rest K durch Entfernen zweier aromatischer Hydroxygruppen erhalten werden kann, sind im Folgenden beispielhaft aufgeführt:
Hydrochinon, Naphthalindiole, wie etwa 1,2-Napthalindiol, 2,6-Napthalindiol, 2,7-Napthalindiol, Bis-(4-hydroxyphenyl), 2,2-Bis-(4-hydroxyphenyl)-propan, Bis-(4-hydroxyphenyl)sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, Bisphenol TMC, ganz besonders bevorzugt 2,2-Bis-(4-hydroxyphenyl)-propan

Der divalente Rest L wird formal durch das Entfernen zweier terminaler Hydroxygruppen in Polyethern erhalten. Bevorzugte Reste L werden dabei in jeder Wiederholungseinheit und in jeder der Formeln (I), (II) und ggf. (IV) unabhängig voneinander ausgewählt aus divalenten Resten der allgemeinen Formel (VII), 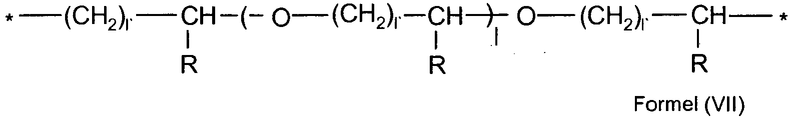 wobei I eine Zahl von 0 bis 5000 ist, jedes I in Formel (VII) und in jeder Wiederholungseinheit unabhängig voneinander für eine Zahl von 1 bis 10 steht und jedes R in Formel (VII) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht.

In bevorzugten divalenten Resten der allgemeinen Formel (VII) steht I für eine Zahl von 1 bis 200, vorzugsweise für eine Zahl von 3 bis 50 und besonders bevorzugt für eine Zahl von 5 bis 20 und/oder I' steht in Formel (VII) und in jeder Wiederholungseinheit unabhängig voneinander für 1, 2, 3, 4, 5, 6, 7 oder 8, insbesondere für 1 oder 3.

Um eine effektive Schlagzähmodifizierung zu erreichen, ist es vorteilhaft, dass jeder Rest L vor dem Entfernen zweier terminaler Hydroxygruppen ein gewichtsmittleres Molekulargewicht (M_{w}) von 200 bis 10000 g/mol, vorzugsweise von 300 bis 5000 g/mol und insbesondere von 500 bis 2000 g/mol aufweist. Weiterhin ist es vorteilhaft, dass jeder Rest L vor dem Entfernen zweier terminaler Hydroxygruppen eine Glasübergangstemperatur (T_{g}) aufweist, die kleiner ist als 20°C, vorzugsweise kleiner ist als 10°C und besonders bevorzugt kleiner ist als 0°C.

Im Rahmen der vorliegenden Erfindung wird das gewichtsmittlere Molekulargewicht (M_{w}) mittels Gelpermeationschromatographie (GPC) mit Polystyrol als Standard bestimmt werden. Die Glasübergangstemperatur (T_{g}) wird im Rahmend der vorliegenden Erfindung durch Dynamisch-Mechanische Thermo-Analyse (DMTA) bestimmt werden, wobei die jeweilige Glasübergangstemperatur aus dem Maximalwert des Verlustmoduls vs. Temperatur Diagramm erhalten wird.

Die oligomere oder polymere urethangruppenfreie Polyether-Verbindung der vorliegenden Erfindung ist herstellbar durch Umsetzung mindestens einer Komponente A mit mindestens einer Komponente B, wobei Komponente A ausgewählt wird aus der Gruppe bestehend aus
(A-1) aromatischen Verbindungen mit mindestens zwei aromatischen Hydroxy-, Carboxyl-, Amino- oder Thiolgruppen und
(A-2) Polyethern mit mindestens zwei terminalen Hydroxy-, Carboxyl-, Amino- oder Thiolgruppen, und Komponente B ausgewählt wird aus der Gruppe bestehend aus
(B-1) Polyethern mit mindestens zwei terminalen Oxiran-, Aziridin- oder Thiirangruppen, und
(B-2) aromatischen Verbindungen der allgemeinen Formel (VIII) 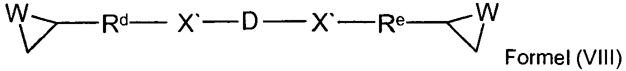 wobei jeder Rest R^{d} und R^{e} jeweils unabhängig voneinander für eine divalente Verbindungsgruppe steht, die 1 bis 100 C-Atome umfasst, jeder Rest X' unabhängig voneinander ausgewählt wird aus -O-, -S-, - NH- oder einer Carboxylgruppe der allgemeinen Form-(C=O)O-, wobei das C-Atom der Carboxylgruppe stets mit dem Rest D verbunden ist, W ausgewählt wird aus -O-, -S- oder -NH- und Rest D mindestens eine aromatische Gruppe umfasst,
   mit der Maßgabe, dass die alleinige Umsetzung von einer oder mehrerer Komponente(n), die der Definition von (A-1) genügen, mit einer oder mehrerer Komponente(n), die der Definition von (B-2) genügen und die alleinige Umsetzung von einer oder mehrerer Komponente(n), die der Definition von (A-2) genügen, mit einer oder mehrerer Komponente(n), die der Definition von (B-1) genügen, ausgeschlossen ist.

Bei der Herstellung der oligomeren oder polymeren urethangruppenfreien Polyether-Verbindung wird/werden somit eine oder mehrere Komponente(n) A mit einer oder mehreren Komponente(n) B umgesetzt, wobei alle verwendeten Komponenten eine unterschiedliche chemische Struktur aufweisen.

Unter dem Begriff "alleinige Umsetzung" wird im Sinne der vorliegenden Erfindung verstanden, dass die Umsetzung zweier Komponenten erfolgt, ohne dass bei der Umsetzung mindestens eine Komponente zugegen ist, die keiner der Definitionen der vorgenannten Komponenten genügt.

Somit ist im Sinne der vorliegenden Erfindung die Umsetzung einer oder mehrerer Komponente(n), die der Definition von (A-1) genügen, mit einer oder mehrerer Komponente(n), die der Definition von (B-2) genügen, nur für den Fall ausgeschlossen, dass bei der Umsetzung keine Komponente zugegen ist, die jeweils der Definition von (A-1) und (B-2) nicht genügt.

Weiterhin ist im Sinne der vorliegenden Erfindung die Umsetzung einer oder mehrerer Komponenten, die der Definition von (A-2) genügen, mit einer oder mehrerer Komponenten, die der Definition von (B-1) genügen, nur für den Fall ausgeschlossen, dass bei der Umsetzung keine Komponente zugegen ist, die jeweils der Definition von (A-2) und (B-1) nicht genügt.

Die vorgenannten alleinigen Umsetzungen sind im Rahmen der vorliegenden Erfindung ausgeschlossen, da die resultierenden Umsetzungsprodukte die bruchmechanischen Eigenschaften der gehärteten polymerisierbaren Zusammensetzungen nur unzureichend verbessern. Es erscheint im Sinne der vorliegenden Erfindung somit erforderlich zu sein, dass die oligomeren oder polymeren urethangruppenfreien Polyether-Verbindungen sowohl aromatische als auch Polyether-basierte Strukturelemente umfassen, um effektiv als Zähigkeitsvermittler in einer gehärteten Benzoxazinmatrix wirksam zu sein.

Bei der Umsetzung der einzelnen Komponenten miteinander reagieren insbesondere Hydroxy-, Carboxyl-, Amino- und/oder Thiolgruppen einer Komponente mit terminalen Oxiran-, Aziridin- oder Thiirangruppen einer anderen Komponente unter Bildung einer oligomeren oder polymeren, urethangruppenfreien Polyether-Verbindung.

Die beschriebene Umsetzung erfolgt dabei in Abhängigkeit von der Reaktivität der einzelnen Komponenten vorzugsweise bei Temperaturen von 20 bis 250°C, etwa bei 100°C bis 180°C. Die Reaktionszeit hängt ebenfalls von der Reaktivität der verwendeten Komponenten ab und beträgt vorzugsweise 10 min bis 12 h, insbesondere 1 h bis 6 h, wobei die Reaktion in einem geeigneten Lösungsmittel, wie beispielsweise Toluol oder ohne Lösungsmittel durchgeführt werden kann.

In einer bevorzugten Ausführungsform der vorliegenden Erfindung wird die Umsetzung der einzelnen Komponenten in Gegenwart mindestens eines geeigneten Katalysators durchgeführt. Geeignete Katalysatoren beschleunigen die Reaktion von Hydroxy-, Carboxyl-, Amino- und/oder Thiolgruppen mit terminalen Oxiran-, Aziridin- oder Thiirangruppen und werden dabei insbesondere ausgewählt aus Tetraalkylammoniumsalzen, wie beispielsweise Tetrabutylammoniumbromid, tertiären Aminen, wie beispielsweise 1,8-Diazabicyclo[5.4.0]undec-7-en (DBU), Aryl/Alkyl-phosphinen, wie beispielsweise Triphenylphosphin oder Harnstoffen, wie beispielsweise Versamin EH-50.

In einer weiteren bevorzugten Ausführungsform der vorliegenden Erfindung wird die Umsetzung der einzelnen Komponenten in Gegenwart mindestens eines Vernetzungsmittels durchgeführt. Geeignete Vernetzungsmittel können beispielsweise ausgewählt werden aus Diolen, Triolen, Tetraolen und Polyolen, die mindestens fünf Hydroxylgruppen aufweisen.

Bevorzugte Komponenten (A-1) werden im Rahmen der vorliegenden Erfindung aus Verbindungen der allgemeinen Formel (VIa) ausgewählt, 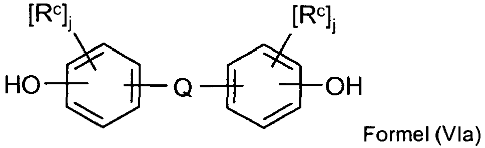 wobei j, Q und R^{c} wie in Formel (VI) definiert sind.

Weiterhin können bevorzugte Komponenten (A-1) auch aus Verbindungen der allgemeinen Formel (Va) ausgewählt werden, 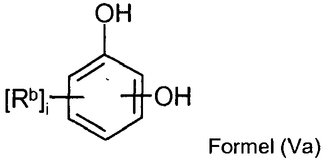 wobei i und R^{b} wie in Formel (V) definiert sind.

Insbesondere ist es im Rahmen der vorliegenden Erfindung vorteilhaft die Komponente (A-1) aus aromatischen Verbindungen mit zwei aromatischen Hydroxygruppen auszuwählen. Geeignete aromatische Verbindungen mit zwei aromatischen Hydroxygruppen sind beispielsweise Hydrochinon, Naphthalindiole, wie etwa 1,2-Napthalindiol, 2,6-Napthalindiol, 2,7-Napthalindiol, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, Bisphenol TMC, ganz besonders bevorzugt 2,2-Bis-(4-hydroxyphenyl)-propan.

Komponente (A-2) steht für Polyether mit mindestens zwei terminalen Hydroxy-, Carboxyl-, Amino- oder Thiolgruppen, wobei insbesondere Polyether bevorzugt sind, die mindestens zwei terminale Hydroxygruppen aufweisen.

In einer bevorzugten Ausführungsform der Erfindung wird Komponente (A-2) aus nicht-aromatischen Polyethern mit mindestens zwei terminalen Hydroxy-, Carboxyl-, Amino- oder Thiolgruppen ausgewählt, wobei nicht-aromatische Polyether mit mindestens zwei terminalen Hydroxygruppen besonders bevorzugt sind. Unter dem Begriff "nicht-aromatische Polyether" sind im Sinne der vorliegenden Erfindung Polyether zu verstehen, die kein aromatisches Strukturelement umfassen.

Bevorzugte Komponenten (A-2) werden aus Verbindungen der allgemeinen Formel (IX) ausgewählt, 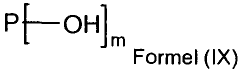 wobei m eine Zahl von 2 bis 100 ist und P für einen m-valenten Polyalkylenoxidrest steht, wie beispielsweise einen m-valenten nicht-aromatischen Polyalkylenoxidrest. Vorzugsweise ist m eine Zahl von 2 bis 50, besonders bevorzugt von 2 bis 10 und ganz besonders bevorzugt von 2 bis 4, wobei m insbesondere für 2 steht. Der m-valenten Polyalkylenoxidrest P kann dabei eine lineare oder verzweigte Struktur aufweisen.

Durch die Verwendung von Polyethern mit zwei terminalen Hydroxygruppen als Komponente (A-2) können oligomere oder polymere urethangruppenfreie Polyether-Verbindung mit linearer Struktur aufgebaut werden, die eine gute Verträglichkeit zur Benzoxazinmatrix aufweisen.

Durch die Verwendung von Polyethern mit mehr als zwei terminalen Hydroxygruppen als Komponente (A-2) können oligomere oder polymere urethangruppenfreie Polyether-Verbindung mit verzweigter Struktur aufgebaut werden.

Geeignete Komponenten (A-2) können beispielsweise ausgewählt werden aus Verbindungen der allgemeinen Formel (VIIa), 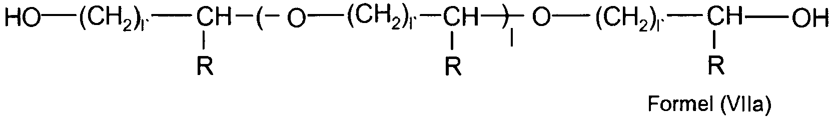 wobei I, I' und R wie in Formel (VII) definiert sind.

Um eine effektive Schlagzähmodifizierung zu erreichen, ist es vorteilhaft, dass Komponente (A-2) ausgewählt wird aus Polyethern mit mindestens zwei terminalen Hydroxy-, Carboxyl-, Amino- oder Thiolgruppen, die ein gewichtsmittleres Molekulargewicht (M_{w}) von 200 bis 10000 g/mol, vorzugsweise von 200 bis 10000 g/mol, vorzugsweise von 300 bis 5000 g/mol und insbesondere von 500 bis 2000 g/mol aufweisen. Weiterhin ist es vorteilhaft, dass Komponente (A-2) aus den vorgenannten Polyethern ausgewählt wird, wobei diese eine Glasübergangstemperatur (T_{g}) aufweisen, die kleiner ist als 20°C, vorzugsweise kleiner ist als 10°C und besonders bevorzugt kleiner ist als 0°C.

Komponente (B-1) steht für Polyether mit mindestens zwei terminalen Oxiran-, Aziridin- oder Thiirangruppen, wobei insbesondere Polyether bevorzugt sind, die mindestens zwei terminale Oxirangruppen aufweisen.

In einer bevorzugten Ausführungsform der Erfindung wird Komponente (B-1) aus nicht-aromatischen Polyethern mit mindestens zwei terminalen Oxiran-, Aziridin- oder Thiirangruppen ausgewählt, wobei nicht-aromatische Polyether mit mindestens zwei terminalen Oxirangruppen besonders bevorzugt sind. Der Begriff "nicht aromatische Polyether" ist dabei wie oben definiert.

Vorzugsweise wird Komponente (B-1) ausgewählt aus Verbindungen der allgemeinen Formel (X), 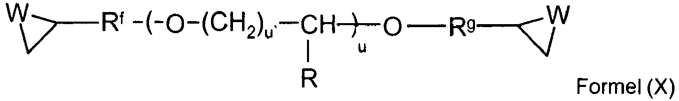 wobei u eine Zahl von 2 bis 5000 ist, jedes u' in jeder Wiederholungseinheit unabhängig voneinander für eine Zahl von 1 bis 10 steht, jeder Rest R^{f} und R^{g} jeweils unabhängig voneinander für eine divalente Verbindungsgruppe steht, die 1 bis 100 C-Atome umfasst, W ausgewählt wird aus -O-, -S- oder -NH- und jedes R in Formel (X) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht.

Insbesondere steht u in Formel (X) für eine Zahl von 1 bis 200, vorzugsweise für eine Zahl von 3 bis 5 und besonders bevorzugt für eine Zahl von 5 bis 20 und/oder u' steht in Formel (X) und in jeder Wiederholungseinheit unabhängig voneinander für 1, 2, 3, 4, 5, 6, 7 oder 8, insbesondere für 1 oder 3.

In bevorzugten Ausführungsformen der vorliegenden Erfindung werden die Reste R^{f} und R^{g} in Formel (X) unabhängig voneinander ausgewählt aus Alkylengruppen, die 1 bis 10 C-Atome umfassen. Insbesondere werden die Reste R^{f} und R^{g} in Formel (X) unabhängig voneinander ausgewählt aus linearen Alkylengruppen, die 1 bis 6, insbesondere 1 oder 2 Kohlenstoffatome umfassen, wie beispielsweise Methylen-, und Ethylengruppen, wobei R^{f} und R^{g} besonders bevorzugt für eine Methylengruppe (-CH₂-) stehen.

Als Komponente (B-1) geeignete Diglycidylether von Polyethern sind beispielsweise unter den Handelsbezeichnungen DER-732, DER-736 (Dow Chemical Co.) oder unter Adeka ED-506 (Adeka Corporation) erhältlich oder durch die dem Fachmann bekannte Umsetzung von Polyetherpolyolen mit Epichlorhydrin herstellbar.

In einer bevorzugten Ausführungsform der Erfindung wird Komponente (B-2) ausgewählt aus Verbindungen der allgemeinen Formel (VIIIa), wobei 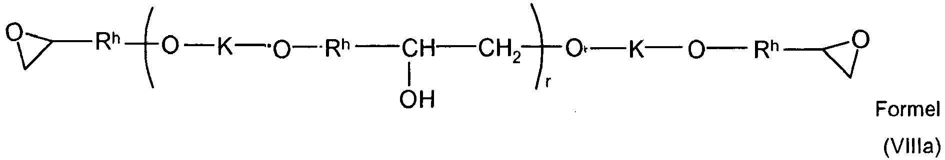 r eine Zahl von 0 bis 10 ist, R^{h} in Formel (VIIIa) und in jeder Wiederholungseinheit unabhängig voneinander ausgewählt wird aus Alkylengruppen, die 1 bis 10 C-Atome umfassen und K in Formel (VIIIa) und in jeder Wiederholungseinheit unabhängig voneinander für einen divalenten Rest von aromatischen Dihydroxyverbindungen nach Entfernen der beiden Hydroxygruppen steht.

In einer bevorzugten Ausführungsform der Erfindung ist r eine Zahl von 0 bis 2, insbesondere von 0 bis 1, wie beispielsweise 0, 0,1, 0,2, 0,3, 0,4, 0,5, 0,6, 0,7, 0,8, 0,9, 1.

R^{h} wird insbesondere ausgewählt aus linearen Alkylengruppen, die 1 bis 6 Kohlenstoffatome, insbesondere 1 oder 2 Kohlenstoffatome umfassen, wie beispielsweise Methylen-, und Ethylengruppen, wobei R^{f} besonders bevorzugt für eine Methylengruppe (-CH₂-) steht.

Der divalente Rest K wird formal durch das Entfernen zweier Hydroxygruppen in aromatischen Dihydroxyverbindungen erhalten und ist wie in Formel (I) definiert.

Als Komponente (B-2) sind insbesondere Diglycidylether von Bisphenol A oder Bisphenol F geeignet, die beispielsweise unter den Handelsbezeichnungen Epon 825, Epon 826, Epon 828, Epon 830, Epon 862, Epon 1001(Hexion Specialty Chemicals Inc.) oder DER-331, DER-332, DER-334 (Dow Chemical Co.) erhältlich sind.
Die vorgenannten Verbindungen können auch durch die Umsetzung einer oder mehrerer geeigneter bisphenolischer Verbindungen mit Epichlorhydrin hergestellt werden.

Weiterhin kann Komponente (B-2) aus Verbindungen ausgewählt werden, in denen der Rest D in Formel (VIII) mindestens eine aromatische Gruppe umfasst, die mindestens eine funktionelle Gruppe der folgenden Formel aufweist, 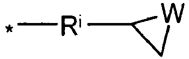 wobei Rⁱ für eine divalente Verbindungsgruppe steht, die 1 bis 100 C-Atome umfasst und W ausgewählt wird aus -O-, -S- oder-NH-. Insbesondere steht W für-O- und/oder Rⁱ für eine Alkylengruppe mit 1 bis 10 C-Atomen, wie beispielsweise Methylen oder Ethylen.

Geeignete Reste D in Formel (VIII) können beispielsweise aus den folgenden aromatischen Resten ausgewählt werden, 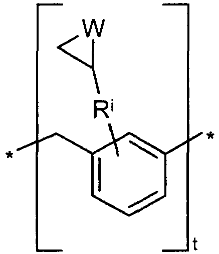 wobei Rⁱ und W wie oben definiert sind und t eine Zahl von 1 bis 100.000, insbesondere von 1 bis 10.000, besonders bevorzugt von 1 bis 1.000 ist.

Entsprechende Komponenten (B-2) sind beispielsweise Glycidylether von Phenolharzen, wie beispielsweise Glycidylether von Novolakharzen.

In einer bevorzugten Ausführungsform der vorliegenden Erfindung wird die oligomere oder polymere urethangruppenfreie Polyether-Verbindung durch Umsetzung mindestens einer Komponente (A-1) mit mindestens einer Komponente (B-1) in Gegenwart mindestens einer Komponente (B-2) erhalten.

Die so erhaltenen oligomeren oder polymeren urethangruppenfreie Polyether-Verbindungen weisen gegenüber vergleichbaren Produkten, die durch die alleinige Umsetzung mindestens einer Komponente (A-1) mit mindestens einer Komponente (B-1) erhalten werden, eine höhere Effektivität als Schlagzähmodifizierungsmittel auf.

Das molare Verhältnis der einzelnen vorgenannten Komponenten wird bei der Umsetzung vorzugsweise so gewählt, dass die erhaltene oligomere oder polymere urethangruppenfreie Polyether-Verbindung ausschließlich terminale Oxiran-, Aziridin- oder Thiirangruppen, insbesondere ausschließlich terminale Oxirangruppen aufweist.

Im Sinne der vorliegenden Erfindung ist es vorteilhaft, wenn mindestens eine oligomere oder polymere urethangruppenfreie Polyether-Verbindung durch Umsetzung mindestens einer Komponente A mit mindestens einer Komponente B hergestellt wird, wobei Komponente A ausgewählt wird aus der Gruppe bestehend aus
- (A-1) aromatischen Verbindungen mit mindestens zwei aromatischen Hydroxy-, Carboxyl-, Amino- oder Thiolgruppen und
- (A-2) nicht-aromatischen Polyethern mit mindestens zwei terminalen Hydroxy-, Carboxyl-, Amino- oder Thiolgruppen,
und Komponente B ausgewählt wird aus der Gruppe bestehend aus
- (B-1) nicht-aromatischen Polyethern mit mindestens zwei terminalen Oxiran-, Aziridin- oder Thiirangruppen und
- (B-2) aromatischen Verbindungen der allgemeinen Formel (VIII) 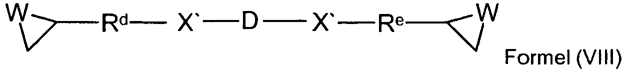 wobei jeder Rest R^{d} und R^{e} jeweils unabhängig voneinander für eine divalente Verbindungsgruppe steht, die 1 bis 100 C-Atome umfasst, jeder Rest X' unabhängig voneinander ausgewählt wird aus - O-, -S-, -NH- oder einer Carboxylgruppe der allgemeinen Form-(C=O)O-, wobei das C-Atom der Carboxylgruppe stets mit dem Rest D verbunden ist, W ausgewählt wird aus -O-, -S- oder -NH- und Rest D mindestens eine aromatische Gruppe umfasst,
mit der Maßgabe, dass die alleinige Umsetzung von einer oder mehrerer Komponente(n), die der Definition von (A-1) genügen, mit einer oder mehrerer Komponente(n), die der Definition von (B-2) genügen und die alleinige Umsetzung von einer oder mehrerer Komponente(n), die der Definition von (A-2) genügen, mit einer oder mehrerer Komponente(n), die der Definition von (B-1) genügen, ausgeschlossen ist.

Wie oben definiert sind unter dem Begriff "nicht-aromatische Polyether" im Sinne der vorliegenden Erfindung Polyether zu verstehen, die kein aromatisches Strukturelement umfassen.

Die vorgenannte oligomere oder polymere urethangruppenfreie Polyether-Verbindung erlaubt die Herstellung polymerisierbarer Zusammensetzungen, die im ausgehärteten Zustand besonders gute bruchmechanische Eigenschaften aufweisen.

Es ist im Sinne der vorliegenden Erfindung insbesondere vorteilhaft mindestens eine Komponente (A-1), ausgewählt aus Verbindungen der allgemeinen Formel (VIa), 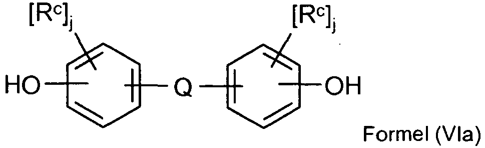 wobei j für eine Zahl von 0 bis 4 steht; Q ausgewählt wird aus der Gruppe bestehend aus Alkylen, Sauerstoff, Schwefel Sulfoxid, Sulfon und einer direkten, kovalenten Bindung und jeder Rest R^{c} unabhängig voneinander ausgewählt wird aus Halogen, insbesondere Fluor, Chlor, Brom oder Iod, C1-40 Alkyl, etwa Methyl, Ethyl, lospropyl, C2-40 Alkenyl, C1-40 Alkoxyl und C7-13 Aralkyl,
mit mindestens einer Komponente (B-1), ausgewählt aus Verbindungen der allgemeinen Formel (Xa), 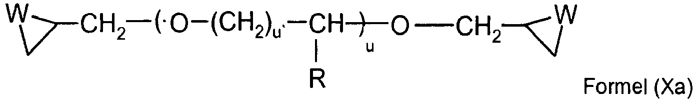 wobei u eine Zahl von 2 bis 5000 ist, jedes u' in jeder Wiederholungseinheit unabhängig voneinander für eine Zahl von 1 bis 10 steht, W und z jeweils unabhängig voneinander ausgewählt werden aus -O-, -S- oder -NH- und jedes R in Formel (XIa) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht,
in Gegenwart mindestens einer Komponente (B-2) umzusetzen, wobei Komponente (B-2) ausgewählt wird aus Verbindungen der allgemeinen Formel (VIIIb), wobei 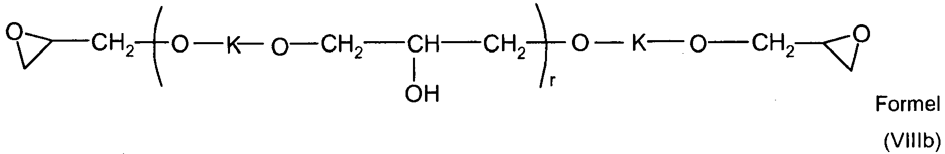 r eine Zahl von 0 bis 10 ist und K in Formel (VIIIb) wie in Formel (I) definiert ist.

Das molare Verhältnis der Komponente (A-1) zur Komponente B (B-1+B-2) liegt dabei insbesondere zwischen 1:1,01 und 1:1,6, vorzugsweise zwischen 1:1,1 und 1:1,3.

Die erfindungsgemäße polymerisierbare Zusammensetzung kann eine oder mehrere der beschriebenen oligomeren oder polymeren urethangruppenfreien Polyether-Verbindungen in Mengen von 2 bis 60 Gew.-%, vorzugsweise von 5 bis 40 Gew.-% und überaus bevorzugt von 10 bis 30 Gew.-%, jeweils bezogen auf die Gesamtmenge der polymerisierbaren Zusammensetzung, enthalten.

In einer bevorzugten Ausführungsform umfasst die polymerisierbare Zusammensetzung als polymerisierbare Harzkomponente nur eine oder mehrere Benzoxazin-Verbindungen. Für bestimmte Anwendungszwecke kann es aber vorteilhaft sein, dass die polymerisierbare Zusammensetzung zusätzlich weitere polymerisierbare Harzkomponenten umfasst. Geeignete Verbindungen können beispielsweise ausgewählt werden aus der Gruppe der Epoxidharze, Polyurethanharze, Polyesterharze, Polyamidharze oder Phenolharze oder aus deren beliebigen Mischungen.

Unter einem "Epoxidharz" wird im Rahmen der vorliegenden Erfindung eine Harz-Zusammensetzung verstanden, die auf der Basis von Epoxidverbindungen oder epoxidhaltigen Verbindungen gebildet wird. Von der Bezeichnung "Epoxidharz" sind im Sinne der vorliegenden Erfindung explizit alle oligomeren oder polymeren urethangruppenfreien Polyether-Verbindung der vorliegenden Verbindung ausgenommen, selbst wenn diese terminale Oxirangruppen aufweisen.

In einer bevorzugten Ausführungsform der Erfindung können die Epoxidverbindungen oder epoxidhaltigen Verbindungen des Epoxidharzsystems der polymerisierbaren Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen. Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze, alicyclische Epoxidharze wie 3,4-Epoxycyclohexylmethyl-3,4-epoxycyclohexancarboxylat und Bis(3,4-epoxycyclohexyl)adipat und Epoxidharzen mit mindestens einem Heteroring.
Insbesondere umfassen die Epoxidharze Octadecylenoxid, Styroloxid, Vinylcyclohexenoxid, Glycidol, Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid und 2-Epoxyhexadecan.

Besonders bevorzugte Epoxidharze im Sinne der vorliegenden Erfindung sind cycloaliphatische Epoxidharze, die kommerziell beispielsweise unter dem Handelsnamen CY179 (Huntsman), ACHWL CER 4221 (Achiewell, LLC) oder Cyracure 6105/6110 (DOW Chemical) erhältlich sind.

In einer bevorzugten Ausführungsform umfasst die erfindungsgemäße polymerisierbare Zubereitung eine Mischung mehrerer der vorgenannten Epoxidharze.

Vorzugsweise beträgt der Anteil des Epoxidharzes oder der Mischung mehrerer Epoxidharze an der Gesamtmenge der polymerisierbaren Zubereitung 5 bis 50 Gew.-%, besonders bevorzugt 10 bis 30 Gew.-% und überaus bevorzugt 15 bis 25 Gew.-%.

In der Regel enthalten die erfindungsgemäßen Zusammensetzungen neben den oben beschriebenen oligomeren oder polymeren urethangruppenfreien Polyether-Verbindungen weiterhin Additive, wie zum Beispiel gemahlene oder gefällte Kreiden, Ruß, Calcium-Magnesiumcarbonate, Schwerspat, sowie insbesondere silicatische Füllstoffe vom Typ des Aluminium-Magnesium-Calcium-Silicats, z. B. Wollastonit oder Chlorit.

Weiterhin können die erfindungsgemäßen Zusammensetzungen andere Addtitive wie z. B. Weichmacher, Reaktivverdünner, weitere Schlagzähmodifizierungsmittel, Rheologiehilfsmittel, Netzmittel, Alterungsschutzmittel, Stabilisatoren und/oder Farbpigmente enthalten. Vorzugsweise sind die Zusammensetzungen jedoch frei von Weichmachern.

Bevorzugte erfindungsgemäße Zusammensetzungen umfassen, bezogen auf die Gesamtmenge der polymerisierbaren Zusammensetzung:
i) 50 bis 90 Gew.-% mindestens einer Benzoxazin-Verbindung,
ii) 10 bis 40 Gew.-% mindestens einer oligomeren oder polymeren urethangruppenfreien Polyether-Verbindung,
iii) 0 bis 20 Gew.-% mindestens eines Epoxidharzes, insbesondere mindestens eines cycloaliphatischen Epoxidharzes und
iv) 0 bis 20 Gew.-% mindestens eines Additivs.

Ein weiterer Gegenstand der vorliegenden Erfindung ist das Polymerisationsprodukt der erfindungsgemäßen polymerisierbaren Zusammensetzung.

Durch die Verwendung der oligomeren oder polymeren urethangruppenfreien Polyether-Verbindungen in der polymerisierbaren Zusammensetzung wird eine effektive Schlagzähmodifizierung des gehärteten Produkts erreicht.

Gegenüber unmodifizierten Benzoxazin-basierten Polymersationsprodukten, also solchen, die keine oligomeren oder polymeren urethangruppenfreien Polyether-Verbindungen umfassen, wird in der Regel eine signifikante Erhöhung des kritischen Spannungsintensitätsfaktors K1c (Critical Stress Intensity Factor) und der Bruchenergie G1c (Critical Energy Release Rate) erreicht.

Die Biegefestigkeit (flexural strength) und das Biegemodul (flexural modulus) können gemäß ASTM D790 bestimmt werden, wobei jeweils ein Probenkörper der Größe 90 mm x 12.7 mm x 3.2 mm, span = 50.8 mm und eine Geschwindigkeit = 1.27 mm/min benutzt werden kann. Der kritische Spannungsintensitätsfaktor K1c (Critical Stress Intensity Factor) und die Bruchenergie G1c (Critical Energy Release Rate) können gemäß ASTM D5045-96 unter Verwendung des so genannten "single etch notch bending (SENB)" bestimmt werden, wobei jeweils ein Probenkörper der Größe 56 mm x 12.7 mm x 3.2 mm verwendet werden kann.

Die Polymerisation der polymerisierbaren Benzoxazin-Verbindung oder der Mischung verschiedener polymerisierbarer Benzoxazin-Verbindungen kann bei erhöhten Temperaturen nach einem selbstinitiierenden Mechanismus (thermische Polymerisation) oder durch Zugabe von kationischen Initiatoren erfolgen.

Geeignete kationische Initiatoren sind beispielsweise Lewissäuren oder andere kationische Initiatoren, wie beispielsweise Metallhalogenide, Organometall-Reagenzien, wie Metalloporphyrine, Methyltosylate, Methyltriflate oder Trifluorsulfonsäuren. Ebenso können basische Reagenzien verwendet werden, um die Polymerisation der polymerisierbaren Benzoxazin-Verbindung oder der Mischung verschiedener polymerisierbarer Benzoxazin-Verbindungen zu initiieren. Geeignete basische Reagenzien können beispielsweise ausgewählt werden aus Imidazol oder Imidazolderivaten.

Vorzugsweise erfolgt die thermische Polymerisation der erfindungsgemäßen polymerisierbaren Zusammensetzung bei Temperaturen von 150 bis 300°C, insbesondere bei Temperaturen von 160 bis 220°C. Durch die Verwendung der oben genannten Initiatoren und/oder anderer Reagenzien kann die Polymerisationstemperatur auch niedriger liegen.

In einer bevorzugten Ausführungsform der Erfindung umbettet das erfindungsgemäße Polymerisationsprodukt eine Schicht oder ein Bündel von Fasern, wobei die Fasern vor der Härtung (Polymerisation) mit der erfindungsgemäßen polymerisierbaren Zusammensetzung behandelt werden. Durch die anschließende Härtung wird ein faserverstärkter Verbundwerkstoff erhalten.

Daher ist ein weiterer Gegenstand der vorliegenden Erfindung ein Verfahren zur Herstellung eines Polymerisationsprodukts der erfindungsgemäßen polymerisierbaren Zusammensetzung, wobei die genannte Zusammensetzung eine Schicht oder ein Bündel von Fasern umbettet und die Fasern vor der Härtung mit der erfindungsgemäßen polymerisierbaren Zusammensetzung behandelt werden.

Das erfindungsgemäße Verfahren umfasst die Schritte:
a) Bereitstellung einer Schicht oder eines Bündels von Fasern;
b) Bereitstellung der erfindungsgemäßen polymerisierbaren Zusammensetzung;
c) Erzeugung eines Verbundsystems durch Behandlung einer Schicht oder eines Bündels von Fasern mit der erfindungsgemäßen polymerisierbaren Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur und vorzugsweise einem erhöhten Druck ausgesetzt wird.
Unter dem Begriff "erhöhte Temperatur" sind im Sinne der vorliegenden Erfindung insbesondere Temperaturen von 40°C bis 300°C, vorzugsweise von 50°C bis 280°C und besonders bevorzugt von 80°C bis 250°C zu verstehen.

Die genannten Fasern werden vorzugsweise ausgewählt aus Glasfasern, Kohlefasern, Aramidfasern, Borfasern, Aluminiumoxidfasern, Siliciumcarbidfasern. Es können zwei oder mehr dieser Fasern als Gemisch verwendet werden. Um ein Produkt mit geringerem Gewicht und höherer Haltbarkeit herzustellen, ist die Verwendung von Kohlefasern besonders bevorzugt.

Die Schicht oder das Bündel von Fasern sind im Sinne der vorliegenden Erfindung nicht auf eine bestimmte Form oder Anordnung festgelegt und so können z. B. lange Fasern, die in eine Richtung parallel gelegt sind, Towgarne, Gewebe (Stoff), Matten, Strickgewebe, Borten verwendet werden.

Die nach dem genannten Verfahren hergestellten Verbundsysteme in Form von faserverstärkten Verbundwerkstoffen können auf Grund ihres geringen Gewichts und der hohen strukturellen Festigkeit beispielsweise im Flugzeugbau oder der Automobilindustrie verwendet werden.

Bei der Herstellung der faserverstärkten Verbundwerkstoffe der vorliegenden Erfindung kann generell auf jedes bekannte Herstellungsverfahren aus dem Stand der Technik zurückgegriffen werden.

In einem weit verbreiteten Verfahren zur Herstellung von faserverstärkten Verbundwerkstoffen werden Prepregs oder Towpregs aus Fasern (Verstärkungsfasern) und ungehärteten polymerisierbaren Zusammensetzungen als Zwischenprodukt hergestellt, die dann handlaminiert und wärmegehärtet werden.

Im Harzinjektionsverfahren (RTM, resin transfer molding) wird eine flüssige wärmehärtbare polymerisierbare Zusammensetzung in ein in einer Form befindliches Verstärkungsfasersubstrat eingespritzt und dieses dann wärmegehärtet, um einen faserverstärkten Verbundwerkstoff zu erhalten.

Bei allgemein bekannten RTM-Verfahren wird eine flüssige wärmehärtbare polymerisierbare Zusammensetzung unter Druck in ein Verstärkungsfasersubstrat eingespritzt, das sich in einer geschlossenen Form befindet, oder ein Verstärkungsfasersubstrat, das sich in einer offenen Form befindet, wird mit einem Vakuumbeutel abgedeckt, wonach zum Einspritzen der polymerisierbaren Zusammensetzung abgesaugt wird, wobei letzteres Verfahren als vakuumunterstütztes Harzinjektionsverfahren (VaRTM) bezeichnet wird.

Ein weiterer Gegenstand der vorliegenden Erfindung ist ein Klebstoff, Dichtstoff oder Beschichtungsmittel, umfassend die erfindungsgemäße polymerisierbare Zusammensetzung.

Ebenfalls Gegenstand der vorliegenden Erfindung ist die Verwendung einer oder mehrerer der vorgenannten oligomeren oder polymeren urtehangruppenfreien Polyether-Verbindungen als Schlagzähmodifizierungsmittel für ein Polymerisationsprodukt, das mindestens eine polymerisierbare Benzoxazin-Verbindung in polymerisierter Form enthält.

Die folgenden Beispiele dienen der näheren Erläuterung der Erfindung.

### Ausführungsbeispiele

1) Herstellung oligomerer oder polymerer urethangruppenfreier Polyether-Verbindungen Bei der Herstellung der oligomeren oder polymeren urethangruppenfreien Polyether-Verbindungen wurden die folgenden Substanzen verwendet:

| | |
|---|---|
| Bisphenol A | 2,2-Bis-(4-hydroxyphenyl)-propan (BisA), Aldrich |
| DER 732 | Polypropylenglykoldiglycidylether, Dow Chemical Company |
| DER 736 | Polypropylenglykoldiglycidylether, Dow Chemical Company |
| DER 331 | Bisphenol A Epoxidharz, Dow Chemical Company |
| DEN 431 | Epoxy Novolakharz, Dow Chemical Company |
| Araldite MY 0510 | (p-Aminophenol)-Triglycidylether, Huntsman |

In einem Reaktionsgefäß wurde in eine Mischung bestehend aus Bisphenol A (Komponente A-1) und DER 732 oder DER 736 (Komponente B-1) vorgelegt. In einigen Fällen wurde die Reaktionsmischung zusätzlich mit DER 331 (Komponente B-2) versetzt. Nach Zugabe von Tetrabutylammoniumbromid (0.3 Gew.-%) als Katalysator wurde die Reaktionsmischung unter Rühren für 1.5 bis 5 h auf 150°C erwärmt. Das Produkt wurde anschließend in Gefäß abgefüllt und mit einem Deckel verschlossen

Die gemäß der oben beschriebenen Vorschrift hergestellten oligomeren oder polymeren urethangruppenfreien Polyether-Verbindungen sind in Tabelle 1 unter Angabe der molaren Verhältnisse der einzelnen Komponenten bei der Herstellung der genannten Polyether-Verbindungen gezeigt.

**Tabelle 1: Molare Verhältnisse der einzelnen Komponenten bei der Herstellung der oligomeren oder polymeren urethangruppenfreien Polyether-Verbindungen**

| Polyether-Verbindung | Molare Anteile der einzelnen Komponenten bei der Herstellung der Polyether-Verbindungen | | | | | |
|---|---|---|---|---|---|---|
| | DER 732 | DER 736 | MY 0510 | DER 431 | DER 331 | BisA |
| #1 | 3 | - | - | - | - | 2 |
| #2 | 2 | - | - | - | - | 3 |
| #3 | 5 | - | - | - | - | 4 |
| #4 | - | 5 | - | - | - | 4 |
| #5 | 2,5 | - | - | - | 2,5 | 4 |
| #6 | 2,72 | - | - | - | 2,27 | 4 |
| #7 | 2,27 | - | - | - | 2,72 | 4 |
| #8 | 2,5 | - | - | - | 2,5 | 4 |
| #9 | 2,5 | - | - | - | 2,5 | 3,9 |
| #10 | 2,5 | - | - | - | 2,5 | 3,8 |
| #11 | 4 | - | - | - | - | 3 |
| #12 | 3,58 | - | - | - | 1,96 | 4 |
| #13 | 3 | - | - | - | 2 | 4 |
| #14 | 2,5 | - | - | 0,33 | 2,17 | 4 |
| #15 | 2,5 | - | 0,58 | - | 1,92 | 4 |
| #16 (Ref.) | nur DER 732 als Additiv | | | | | |

### 2) Herstellung der polymerisierbaren Zusammensetzung

Als Benzoxazin-Verbindung (Box) wurde eine Mischung zweier Benzoxazin-Verbindungen verwendet, die bezogen auf die Gesamtmenge der Mischung zu 60 Gew.-% aus Box-I und zu 40 Gew.-% aus Box-II besteht.

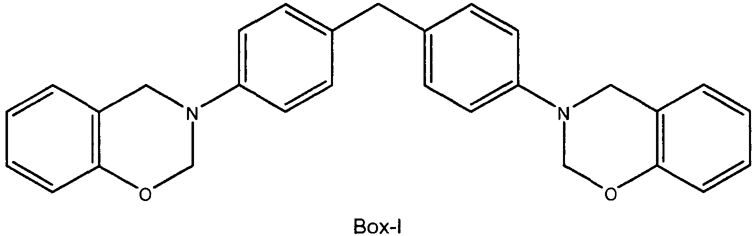

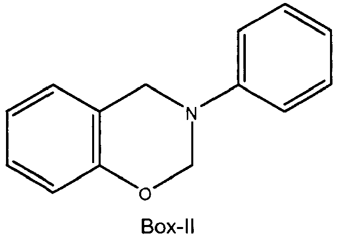

Die Herstellung der polymerisierbaren Zusammensetzung erfolgte in einem 500 mL Reaktionskolben. In diesem wurden 120 g der oben gezeigten Benzoxazin-Verbindung (Box) und 40 g des cycloalipahtischen Epoxidharzes CER 4221 (Achiewell) vorgelegt. Unter Rühren wurde die entsprechende Menge der oligomeren oder polymeren urethangruppenfreien Polyether-Verbindungen und ggf. ein Härtungskatalysator (Diethylaminsalz der Trifluormethansulfonsäure, Nacure Super A233, King Industries) zugesetzt.
Die Mischung wurde unter Rühren im Vakuum (< 10 mbar) bei 80°C für 15 bis 30 Minuten homogenisiert und anschließend in geschlossenen Behältnissen gelagert.

Tabelle 2 zeigt die Anteile der einzelnen Bestandteile an den polymerisierbaren Zusammensetzungen, jeweils bezogen auf die Gesamtmenge der polymerisierbaren Zusammensetzung.

**Tabelle 2: Polymerisierbare Zusammensetzungen**

| Polymerisierbare Zusammensetzung | Box [Gew.-%] | CER 4221 [Gew.-%] | Polyether-Verb. oder Referenz-Verb. | Nacure Super A233 [Gew.-%]^{a} |
|---|---|---|---|---|
| | | | | |
| 1 (Ref.) | 80 | 20 | - | - |
| 2 (Ref.) | 80 | 20 | - | 1 |
| 2a (Ref.) | 60 | 20 | #16, 20 Gew.-% | 1 |
| 3 | 60 | 20 | #1, 20 Gew.-% | - |
| 4 | 60 | 20 | #2, 20 Gew.-% | - |
| 5 | 60 | 20 | #3, 20 Gew.-% | - |
| 6 | 60 | 20 | #4, 20 Gew.-% | - |
| 7 | 60 | 20 | #5, 20 Gew.-% | - |
| 8 | 60 | 20 | #13, 20 Gew.-% | 1 |
| 9 | 60 | 20 | #6, 20 Gew.-% | - |
| 10 | 60 | 20 | #7, 20 Gew.-% | - |
| 11 | 63,75 | 21,25 | #8, 15 Gew.-% | 1 |
| 12 | 60 | 20 | #8, 20 Gew.-% | 1 |
| 13 | 56,25 | 18,75 | #8, 25 Gew.-% | 1 |
| 14 | 60 | 20 | #9, 20 Gew.-% | 1 |
| 15 | 60 | 20 | #10, 20 Gew.-% | 1 |
| 16 | 67,5 | 22,5 | #19, 10 Gew.-% | - |
| 17 | 60 | 20 | #12, 20 Gew.-% | 1 |
| 18 | 60 | 20 | #14, 20 Gew.-% | 1 |
| 19 | 60 | 20 | #15, 20 Gew.-% | 1 |

| | | | | |
|---|---|---|---|---|
| ^{a} Die Gew.-% Angabe von Nacure Super A233 ist bezogen auf die Gesamtmenge der Harzkomponenten (Box + CER 4221 + Polyether-Verbindung) | | | | |

### 3) Mechanische Daten der Polymerisationsprodukte der polymerisierbaren Zusammensetzungen

Die polymerisierbaren Zusammensetzungen wurden in einem Auoklaven bei 180°C innerhalb von 90 min thermisch ausgehärtet. Anschließend wurden die gehärteten Proben (Polymerisationsprodukte) auf Raumtemperatur abgekühlt und mit den folgenden analytischen Methoden charakterisiert.

Die Biegefestigkeit (flexural strength) and das Biegemodul (flexural modulus) wurden gemäß ASTM D790 bestimmt, wobei jeweils ein Probenkörper der Größe 90 mm x 12.7 mm x 3.2 mm, span = 50.8 mm und eine Geschwindigkeit = 1.27 mm/min benutzt wurde.

Der kritische Spannungsintensitätsfaktor K1c und der G1c Wert (Bruchenergie) wurden gemäß ASTM D5045-96 unter Verwendung des sogenannten "single etch notch bending (SENB)" bestimmt, wobei jeweils ein Probenkörper der Größe 56 mm x 12.7 mm x 3.2 mm verwendet wurde.

Die mechanischen Daten der Polymerisationsprodukte der polymerisierbaren Zusammensetzungen sind in Tabelle 3 dargestellt.

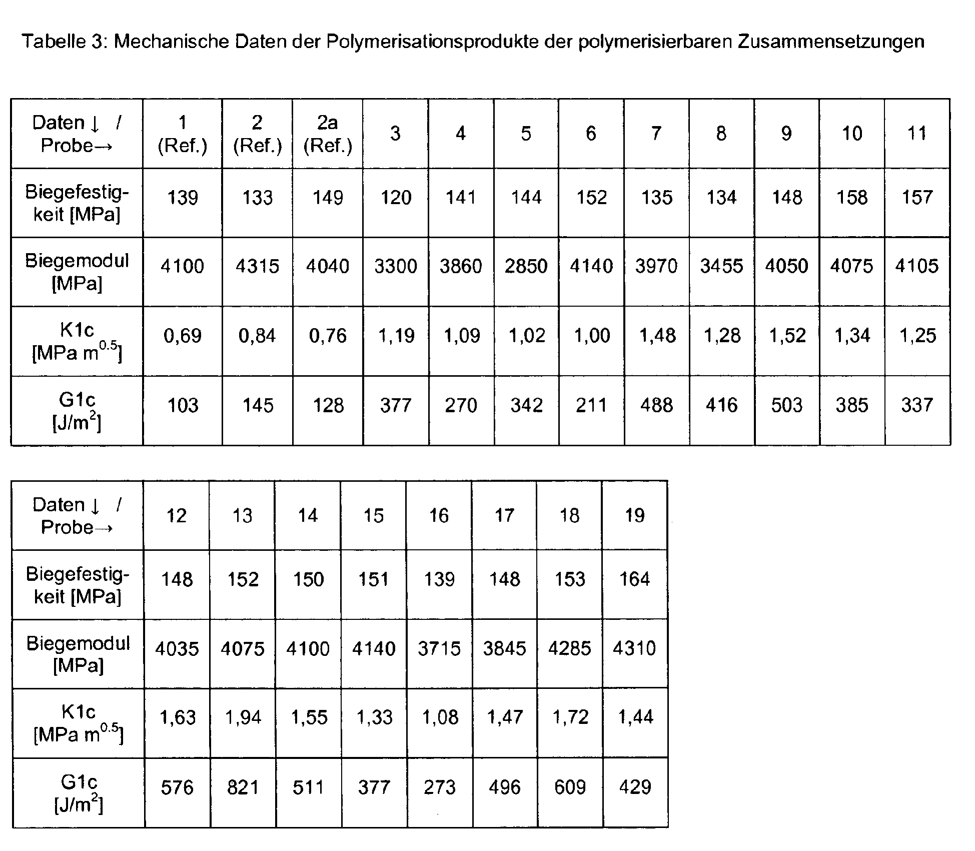

Tabelle 3 zeigt, dass die erfindungsgemäßen Polymerisationsprodukte sehr hohe K1c und G1c Werte bei einem hohen Biegemodul aufweisen. Die gezeigten mechanischen Daten verdeutlichen somit, dass die oligomeren oder polymeren urethangruppenfreien Polyether-Verbindungen der vorliegenden Erfindung in hervorragender Weise als Schlagzähmodifizierungsmittel für Benzoxazin-basierte Harzsysteme geeignet sind.

Demgegenüber weist die Referenz-Zusammensetzungen (2a), die nur einen Polypropylenglykoldiglycidylether (DER 732) als Additiv enthält deutlich schlechtere bruchmechanische Eigenschaften auf.

## Patentansprüche

1. Polymerisierbare Zusammensetzung, umfassend
i) mindestens eine Benzoxazin-Verbindung und
ii) mindestens eine oligomere oder polymere urethangruppenfreie Polyether-Verbindung, umfassend ein oder mehrere Strukturelemente der allgemeinen Formel (I), 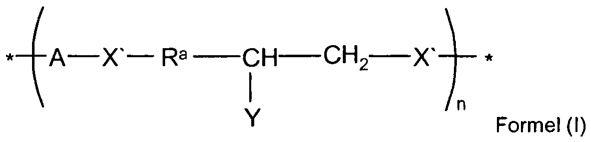 wobei n eine Zahl von 5 bis 10000 ist, jeder Rest R^{a} in jeder Wiederholungseinheit unabhängig voneinander für eine divalente Verbindungsgruppe steht, die 1 bis 100 C-Atome umfasst, jeder Rest X' in jeder Wiederholungseinheit unabhängig voneinander ausgewählt wird aus -O-, -S-, -NH- oder einer Carboxylgruppe der allgemeinen Form -(C=O)O-, wobei das C-Atom der Carboxylgruppe stets mit dem Rest A verbunden ist, jeder Rest Y in jeder Wiederholungseinheit unabhängig voneinander ausgewählt wird aus -OH, -SH und -NH₂ und jeder Rest A in jeder Wiederholungseinheit unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht, mit der Maßgabe, dass, bezogen auf die Gesamtanzahl aller Reste A in der oligomeren oder polymeren urethangruppenfreien Polyether-Verbindung, 20 bis 80% aller Reste A für K und 20 bis 80% aller Reste A für L stehen.

2. Polymerisierbare Zusammensetzung nach Anspruch 1, **dadurch gekennzeichnet, dass** die oligomere oder polymere urethangruppenfreie Polyether-Verbindung ausgewählt wird aus Verbindungen der allgemeinen Formel (II), 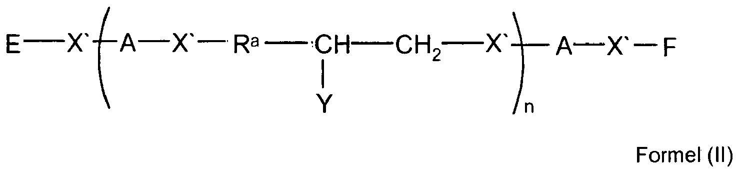 wobei E ausgewählt wird aus Wasserstoff oder Resten der allgemeinen Formel (III), 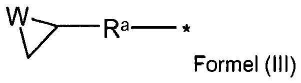 F ausgewählt wird aus Wasserstoff oder Resten der allgemeinen Formel (IV), 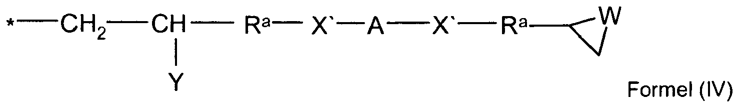 wobei jeder Rest W unabhängig voneinander ausgewählt wird aus -O-, -S- oder -NH- und die Reste A, X', R^{a} und Y sowie n jeweils wie in Anspruch 1 definiert sind.

3. Polymerisierbare Zusammensetzung nach Anspruch 1 und/oder 2, **dadurch gekennzeichnet, dass** jeder Rest R^{a} in Formel (I), (II), (III) und/oder (IV) unabhängig voneinander für eine Methylengruppe steht.

4. Polymerisierbare Zusammensetzung nach mindestens einem der Ansprüche 1 bis 3, **dadurch gekennzeichnet, dass** jeder Rest X' in Formel (I),(II) und/oder (IV) unabhängig voneinander für -O- steht.

5. Polymerisierbare Zusammensetzung nach mindestens einem der Ansprüche 1 bis 4, **dadurch gekennzeichnet, dass** der Rest Y in Formel (I),(II) und/oder (IV) für -OH steht.

6. Polymerisierbare Zusammensetzung nach mindestens einem der Ansprüche 1 bis 5, **dadurch gekennzeichnet, dass** Rest W in Formel (III) und/oder (IV) für -O- steht.

7. Polymerisierbare Zusammensetzung nach mindestens einem der Ansprüche 1 bis 6, **dadurch gekennzeichnet, dass** K für einen Rest steht, der ausgewählt wird aus divalenten Resten der allgemeinen Formel (V) und /oder Formel (VI), 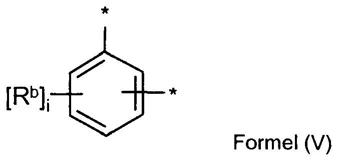 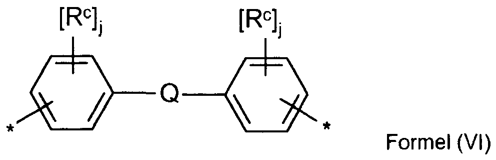 wobei i und j unabhängig voneinander für eine Zahl von 0 und 4 stehen, R^{b} und R^{c} unabhängig voneinander ausgewählt werden aus Halogen, C1-40 Alkyl, C2-40 Alkenyl, C1-40Alkoxyl und C7-13Aralkyl oder divalenten Resten, die aus der Phenyl-Struktur eine entsprechende Naphthyl-Struktur machen und Q ausgewählt wird aus Alkylen, Sauerstoff, Schwefel, Sulfoxid, Sulfon und einer direkten, kovalenten Bindung.

8. Polymerisierbare Zusammensetzung nach mindestens einem der Ansprüche 1 bis 7, **dadurch gekennzeichnet, dass** L für einen Rest steht, der ausgewählt wird aus divalenten Resten der allgemeinen Formel (VII), 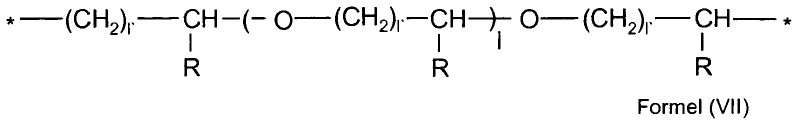 wobei I eine Zahl von 0 bis 5000 ist, jedes I' in Formel (VII) und in jeder Wiederholungseinheit unabhängig voneinander für eine Zahl von 1 bis 10 steht, jedes R in Formel (VII) und in jeder Wiederholungseinheit unabhängig voneinander ausgewählt wird aus Wasserstoff oder linearen oder verzweigten gegebenenfalls substituierten C1-12 Alkylgruppen.

9. Polymerisierbare Zusammensetzung, umfassend
i) mindestens eine Benzoxazin-Verbindung und
ii) mindestens eine oligomere oder polymere urethangruppenfreie Polyether-Verbindung, herstellbar durch Umsetzung mindestens einer Komponente A mit mindestens einer Komponente B,
wobei Komponente A ausgewählt wird aus der Gruppe bestehend aus (A-1) aromatischen Verbindungen mit mindestens zwei aromatischen Hydroxy-, Carboxyl-, Amino- oder Thiolgruppen und
(A-2) Polyethern mit mindestens zwei terminalen Hydroxy-, Carboxyl-, Amino- oder Thiolgruppen,
und Komponente B ausgewählt wird aus der Gruppe bestehend aus (B-1) Polyethern mit mindestens zwei terminalen Oxiran-, Aziridin- oder Thiirangruppen und
(B-2) aromatischen Verbindungen der allgemeinen Formel (VIII) 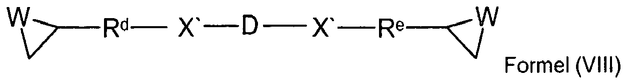 wobei jeder Rest R^{d} und R^{e} jeweils unabhängig voneinander für eine divalente Verbindungsgruppe steht, die 1 bis 100 C-Atome umfasst, jeder Rest X' unabhängig voneinander ausgewählt wird aus -O-, -S-, -NH- oder einer Carboxylgruppe der allgemeinen Form-(C=O)O-, wobei das C-Atom der Carboxylgruppe stets mit dem Rest D verbunden ist, W ausgewählt wird aus -O-, -S- oder -NH- und Rest D mindestens eine aromatische Gruppe umfasst,
mit der Maßgabe, dass die alleinige Umsetzung von einer oder mehrerer Komponente(n), die der Definition von (A-1) genügen, mit einer oder mehrerer Komponente(n), die der Definition von (B-2) genügen und die alleinige Umsetzung von einer oder mehrerer Komponente(n), die der Definition von (A-2) genügen, mit einer oder mehrerer Komponente(n), die der Definition von (B-1) genügen, ausgeschlossen ist.

10. Polymerisierbare Zusammensetzung nach Anspruch 9, **dadurch gekennzeichnet, dass** die oligomere oder polymere urethangruppenfreie Polyether-Verbindung mindestens eine terminale Oxiran-, Aziridin- und/oder Thiirangruppen, und/oder mindestens eine terminale Hydroxyl-, Amino- und/oder Thiolgruppe aufweist.

11. Polymerisierbare Zusammensetzung nach Anspruch 9 und/oder 10, **dadurch gekennzeichnet, dass** Komponente (A-1) ausgewählt wird aus Verbindungen der allgemeinen Formel (VIa), 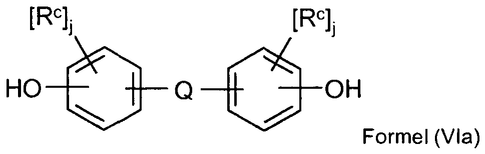 wobei j für eine Zahl von 0 bis 4 steht, R^{c} ausgewählt wird aus Halogen, C1-40 Alkyl, C2-40 Alkenyl, C1-40 Alkoxyl und C7-13 Aralkyl und Q ausgewählt wird aus der Gruppe bestehend aus Alkylen, Sauerstoff, Schwefel Sulfoxid, Sulfon und einer direkten, kovalenten Bindung.

12. Polymerisierbare Zusammensetzung nach mindestens einem der Ansprüche 9 bis 11, **dadurch gekennzeichnet, dass** Komponente (A-2) ausgewählt wird aus Verbindungen der allgemeinen Formel (IX), 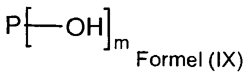 wobei m eine Zahl von 2 bis 100 ist und P für einen m-valenten Polyalkylenoxidrest steht.

13. Polymerisierbare Zusammensetzung nach mindestens einem der Ansprüche 9 bis 12, **dadurch gekennzeichnet, dass** Komponente (B-1) ausgewählt wird aus Verbindungen der allgemeinen Formel (X), 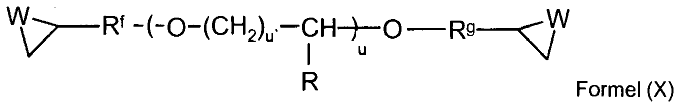 wobei u eine Zahl von 2 bis 5000 ist, jedes u' in jeder Wiederholungseinheit unabhängig voneinander für eine Zahl von 1 bis 10 steht, jedes R in Formel (X) und in jeder Wiederholungseinheit unabhängig voneinander ausgewählt wird aus Wasserstoff oder linearen oder verzweigten gegebenenfalls substituierten C1-12 Alkylgruppen, jeder Rest R^{f} und R^{g} jeweils unabhängig voneinander für eine divalente Verbindungsgruppe steht, die 1 bis 100 C-Atome umfasst und W ausgewählt wird aus -O-, -S- oder -NH-.

14. Polymerisierbare Zusammensetzung nach mindestens einem der Ansprüche 1 bis 13, **dadurch gekennzeichnet, dass** die oligomere oder polymere urethangruppenfreie Polyether-Verbindung ein gewichtsmittleres Molekulargewicht von 1000 bis 100000 g/mol aufweist.

15. Polymerisationsprodukt der polymerisierbaren Zusammensetzung nach mindestens einem der Ansprüche 1 bis 14.

16. Polymerisationsprodukt nach Anspruch 15, **dadurch gekennzeichnet, dass** das Polymerisationsprodukt eine Schicht oder ein Bündel von Fasern umfasst, wobei die Fasern vor der Härtung mit einer polymerisierbaren Zusammensetzung nach mindestens einem der Ansprüche 1 bis 14 behandelt werden.

17. Verfahren zur Herstellung eines Polymerisationsproduktes nach Anspruch 16, umfassend die Schritte:
a) Bereitstellung einer Schicht oder eines Bündels von Fasern;
b) Bereitstellung einer polymerisierbaren Zusammensetzung nach mindestens einem der Ansprüche 1 bis 14;
c) Erzeugung eines Verbundsystems durch Behandlung einer Schicht oder eines Bündels von Fasern mit der polymerisierbaren Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur ausgesetzt wird.

18. Klebstoff, Dichtstoff oder Beschichtung, umfassend eine polymerisierbare Zusammensetzung nach mindestens einem der Ansprüche 1 bis 14.

19. Verwendung einer oder mehrerer oligomerer oder polymerer urethangruppenfreier Polyether-Verbindungen, die Bestandteil einer polymerisierbaren Zusammensetzung nach mindestens einem der Ansprüche 1 bis 14 ist, als Schlagzähmodifizierungsmittel für ein Polymerisationsprodukt, das mindestens eine polymerisierbare Benzoxazin-Verbindung in polymerisierter Form enthält.

## Claims

1. A polymerizable composition, encompassing
i) at least one benzoxazine compound and
ii) at least one oligomeric or polymeric urethane group-free polyether compound, encompassing one or more structural elements of the general formula (I), 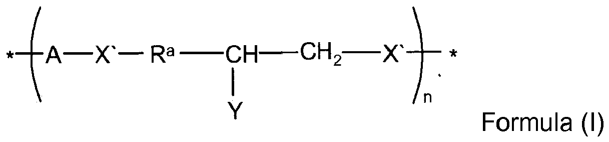 in which n is a number from 5 to 10,000, each residue R^{a} in each repeating unit independently denotes a divalent linking group encompassing 1 to 100 C atoms, each residue X' in each repeating unit is independently selected from -O-, -S-, -NH- or a carboxyl group of the general form -(C=O)O-, in which the C atom of the carboxyl group is always connected to the residue A, each residue Y in each repeating unit is independently selected from -OH, -SH and -NH₂ and each residue A in each repeating unit is independently selected from K or L, K denoting a divalent residue of aromatic dihydroxyl compounds following removal of both hydroxyl groups and L denoting a divalent residue of polyethers following removal of two terminal hydroxyl groups, with the proviso that, relative to the total number of all residues A in the oligomeric or polymeric urethane group-free polyether compound, 20 to 80% of all residues A denote K and 20 to 80% of all residues A denote L.

2. The polymerizable composition according to claim 1, **characterised in that** the oligomeric or polymeric urethane group-free polyether compound is selected from compounds of the general formula (II), 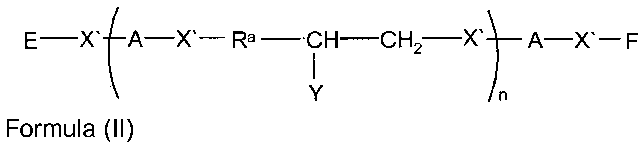 in which E is selected from hydrogen or residues of the general formula (III), 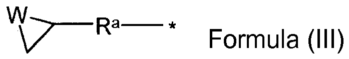 F is selected from hydrogen or residues of the general formula (IV), 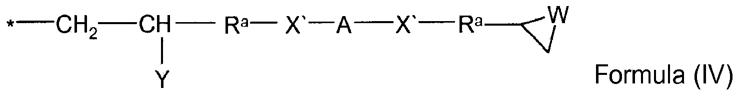 in which each residue W is independently selected from -O-, -S- or -NH- and the residues A, X', R^{a} and Y and n are each as defined in claim 1.

3. The polymerizable composition according to claim 1 and/or 2, **characterised in that** each residue R^{a} in formula (I), (II), (III) and/or (IV) independently denotes a methylene group.

4. The polymerizable composition according to at least one of claims 1 to 3, **characterised in that** each residue X' in formula (I), (II) and/or (IV) independently denotes -O-.

5. The polymerizable composition according to at least one of claims 1 to 4, **characterised in that** the residue Y in formula (I), (II) and/or (IV) denotes - OH.

6. The polymerizable composition according to at least one of claims 1 to 5, **characterised in that** the residue W in formula (III) and/or (IV) denotes -O-.

7. The polymerizable composition according to at least one of claims 1 to 6, **characterised in that** K denotes a residue selected from divalent residues of the general formula (V) and/or formula (VI), 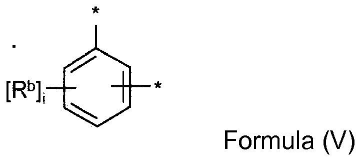 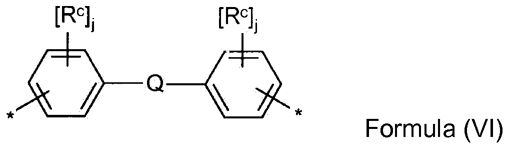 in which i and j independently of each other denote a number from 0 to 4, R^{b} and R^{c} are selected independently of each other from halogen, C₁₋₄₀ alkyl, C₂₋₄₀ alkenyl, C₁₋₄₀alkoxyl and C₇₋₁₃ aralkyl or divalent residues that make a corresponding naphthyl structure from the phenyl structure, and Q is selected from alkylene, oxygen, sulfur, sulfoxide, sulfone and a direct, covalent bond.

8. The polymerizable composition according to at least one of claims 1 to 7, **characterised in that** L denotes a residue selected from divalent residues of the general formula (VII), 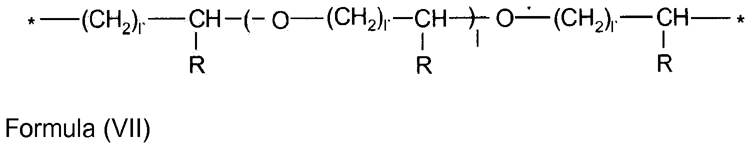 in which I denotes a number from 0 to 5000, each I' in formula (VII) and in each repeating unit independently denotes a number from 1 to 10, each R in formula (VII) and in each repeating unit is independently selected from hydrogen or linear or branched optionally substituted C₁₋₁₂ alkyl groups.

9. A polymerizable composition, encompassing
i) at least one benzoxazine compound and
ii) at least one oligomeric or polymeric urethane group-free polyether compound,
that can be produced by reacting at least one component A with at least one component B,
component A being selected from the group consisting of
(A-1) aromatic compounds having at least two aromatic hydroxyl, carboxyl, amino or thiol groups and
(A-2) polyethers having at least two terminal hydroxyl, carboxyl, amino or thiol groups,
and component B being selected from the group consisting of (B-1) polyethers having at least two terminal oxirane, aziridine or thiirane groups and
(B-2) aromatic compounds of the general formula (VIII) 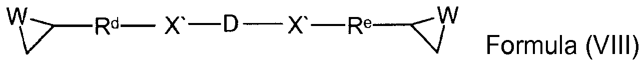 in which each residue R^{d} and R^{e} independently denotes a divalent linking group encompassing 1 to 100 C atoms, each residue X' is independently selected from -O-, -S-, -NH- or a carboxyl group of the general form - (C=O)O-, in which the C atom of the carboxyl group is always connected to the residue D, W is selected from -O-, -S- or -NH- and the residue D encompasses at least one aromatic group,
with the proviso that the exclusive reaction of one or more components satisfying the definition of (A-1) with one or more components satisfying the definition of (B-2) and the exclusive reaction of one or more components satisfying the definition of (A-2) with one or more components satisfying the definition of (B-1) is excluded.

10. The polymerizable composition according to claim 9, **characterised in that** the oligomeric or polymeric urethane group-free polyether compound has at least one terminal oxirane, aziridine and/or thiirane group and/or at least one terminal hydroxyl, amino and/or thiol group.

11. The polymerizable composition according to claim 9 and/or 10, **characterised in that** component (A-1) is selected from compounds of the general formula (VIa), 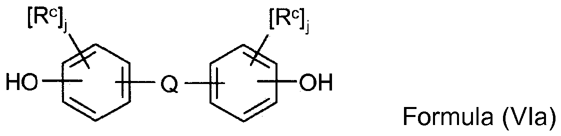 in which j denotes a number from 0 to 4, R^{c} is selected from halogen, C₁₋₄₀ alkyl, C₂₋₄₀ alkenyl, C₁₋₄₀alkoxyl and C₇₋₁₃ aralkyl and Q is selected from the group consisting of alkylene, oxygen, sulfur, sulfoxide, sulfone and a direct, covalent bond.

12. The polymerizable composition according to at least one of claims 9 to 11, **characterised in that** component (A-2) is selected from compounds of the general formula (IX), 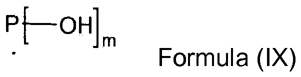 in which m is a number from 2 to 100 and P denotes an m-valent polyalkylene oxide residue.

13. The polymerizable composition according to at least one of claims 9 to 12, **characterised in that** component (B-1) is selected from compounds of the general formula (X), 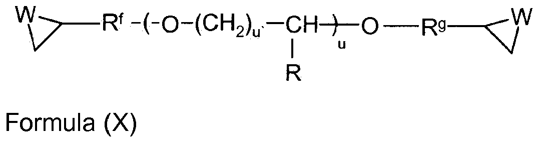 in which u is a number from 2 to 5000, each u' in each repeating unit independently denotes a number from 1 to 10, each R in formula (X) and in each repeating unit is independently selected from hydrogen or linear or branched optionally substituted C₁₋₁₂ alkyl groups, each residue R^{f} and R^{g} independently denotes a divalent linking group encompassing 1 to 100 C atoms and W is selected from -O-, -S- or -NH-.

14. The polymerizable composition according to at least one of claims 1 to 13, **characterised in that** the oligomeric or polymeric urethane group-free polyether compound has a weight-average molecular weight of 1000 to 100,000 g/mol.

15. A polymerization product of the polymerizable composition according to at least one of claims 1 to 14.

16. The polymerization product according to claim 15, **characterised in that** the polymerization product encompasses a layer or a bundle of fibers, the fibers being treated prior to curing with a polymerizable composition according to at least one of claims 1 to 14.

17. A method for producing a polymerization product according to claim 16, encompassing the following steps:
a) provision of a layer or a bundle of fibers;
b) provision of a polymerizable composition according to at least one of claims 1 to 14;
c) production of a composite system by treating a layer or a bundle of fibers with the polymerizable composition;
d) optional removal of an excess amount of the polymerizable composition from the composite system,
the cited polymerization product being obtained by exposing the composite system to elevated temperature.

18. An adhesive, sealant or coating encompassing a polymerizable composition according to at least one of claims 1 to 14.

19. Use of one or more oligomeric or polymeric urethane group-free polyether compounds forming part of a polymerizable composition according to at least one of claims 1 to 14, as an impact modifying agent for a polymerization product containing at least one polymerizable benzoxazine compound in polymerized form.

## Revendications

1. Composition polymérisable comprenant
i) au moins un composé de benzoxazine, et
ii) au moins un composé de polyéther oligomère ou polymère exempt de groupes uréthane, comprenant un ou plusieurs éléments de structure répondant à la formule générale (I) 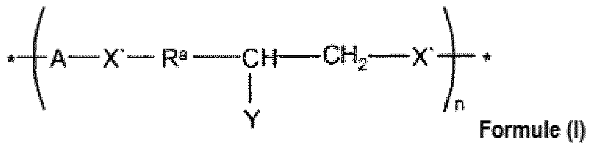 dans laquelle n représente un nombre de 5 à 10.000, chaque résidu R^{a} dans chaque unité de répétition représente, de manière respectivement indépendante, un groupe de liaison divalent, qui comprend de 1 à 100 atomes de carbone, chaque résidu X' dans chaque unité de répétition est choisi de manière respectivement indépendante parmi un atome d'oxygène, un atome de soufre, un groupe NH ou un groupe carboxyle répondant à la formule générale -(C=O)O-, l'atome de carbone du groupe carboxyle étant toujours lié au résidu A, chaque résidu Y dans chaque unité de répétition est choisi de manière respectivement indépendante parmi un groupe -OH, un groupe -SH et un groupe -NH₂ et chaque résidu A dans chaque unité de répétition est choisi de manière respectivement indépendante parmi un groupe K ou un groupe L, K représentant un résidu divalent de composés dihydroxylés aromatiques après élimination des deux groupes hydroxyle et L représentant un résidu divalent de polyéthers après élimination des deux groupes hydroxyle terminaux, avec cette mesure que, rapporté au nombre total de tous les résidus A dans le composé de polyéther oligomère ou polymère exempt de groupes uréthane, de 20 à 80 % de tous les résidus A représentent un groupe K et de 20 à 80 % de tous les résidus A représentent un groupe L.

2. Composition polymérisable selon la revendication 1, **caractérisée en ce que** le composé de polyéther oligomère ou polymère exempt de groupes uréthane est choisi parmi des composés répondant à la formule générale (II), 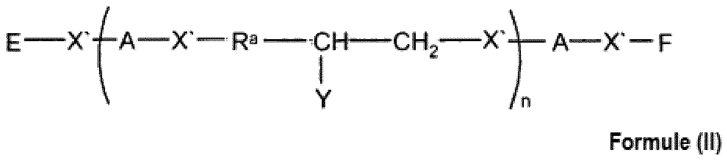 dans laquelle E est choisi parmi un atome d'hydrogène ou des résidus répondant à la formule générale (III) 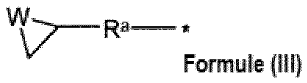 F est choisi parmi un atome d'hydrogène ou des résidus répondant à la formule générale (IV) 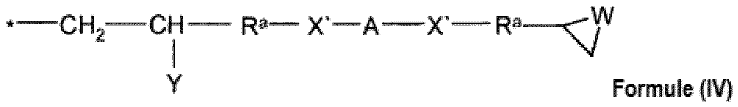 chaque résidu W étant choisi de manière respectivement indépendante parmi un atome d'oxygène, un atome de soufre ou un groupe NH et les résidus A, X', R^{a} et Y ainsi que n étant chaque fois tels que définis à la revendication 1.

3. Composition polymérisable selon la revendication 1 et/ou 2, **caractérisée en ce que** chaque résidu R^{a} dans les formules (I), (II), (III) et/ou (IV) représente, de manière respectivement indépendante, un groupe méthylène.

4. Composition polymérisable selon au moins une des revendications 1 à 3, **caractérisée en ce que** chaque résidu X' dans les formules (I), (II) et/ou (IV) représente, de manière respectivement indépendante, un atome d'oxygène.

5. Composition polymérisable selon au moins une des revendications 1 à 4, **caractérisée en ce que** le résidu Y dans les formules (I), (II) et/ou (IV) représente un groupe -OH.

6. Composition polymérisable selon au moins une des revendications 1 à 5, **caractérisée en ce que** le résidu W dans les formules (III) et/ou (IV) représente un atome d'oxygène.

7. Composition polymérisable selon au moins une des revendications 1 à 6, **caractérisée en ce que** K représente un résidu qui est choisi parmi des résidus divalents répondant à la formule générale (V) et/ou à la formule générale (VI) 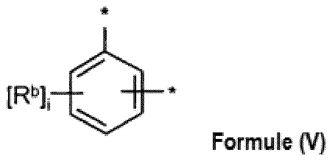 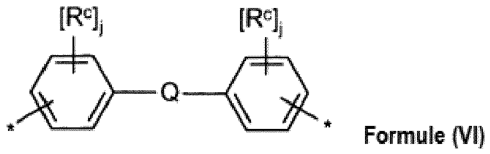 dans lesquelles i et j représentent, de manière respectivement indépendante, un nombre entre 0 et 4, R^{b} et R^{c} sont choisis, de manière respectivement indépendante, parmi un atome d'halogène, un groupe alkyle en C₁-C₄₀, un groupe alcényle en C₂-C₄₀, un groupe alcoxy en C₁-C₄₀ et un groupe aralkyle en C₇-C₁₃ ou des résidus divalents qui, à partir de la structure phényle forment une structure naphtyle correspondante, et Q est choisi parmi un groupe alkylène, un atome d'oxygène, un atome de soufre, un groupe sulfoxyde, un groupe sulfone et une liaison covalente directe.

8. Composition polymérisable selon au moins une des revendications 1 à 7, **caractérisée en ce que** L représente un résidu qui est choisi parmi des résidus divalents répondant à la formule générale (VII) 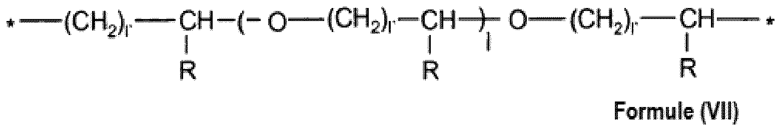 dans laquelle I représente un nombre de 0 à 5.000, chaque I' dans la formule (VII) et dans chaque unité de répétition représente de manière respectivement indépendante un nombre de 1 à 10, chaque R dans la formule (VII) et dans chaque unité de répétition est choisi de manière respectivement indépendante parmi un atome d'hydrogène ou des groupes alkyle en C₁-C₁₂ linéaires ou ramifiés, facultativement substitués.

9. Composition polymérisable comprenant
i) au moins un composé de benzoxazine, et
ii) au moins un composé de polyéther oligomère ou polymère exempt de groupes uréthane, que l'on peut obtenir par mise en réaction d'au moins un composant A avec au moins un composant B,
le composant A étant choisi parmi le groupe constitué par
(A-1) des composés aromatiques comprenant au moins deux groupes thiol, amino, carboxyle ou hydroxyle aromatiques et
(A-2) des polyéthers comprenant au moins deux groupes thiol, amino, carboxyle ou hydroxyle terminaux ;
et le composant B étant choisi parmi le groupe constitué par
(B-1) des polyéthers comprenant au moins deux groupes thiirane, aziridine ou oxirane terminaux et
(B-2) des composés aromatiques répondant à la formule générale (VIII) 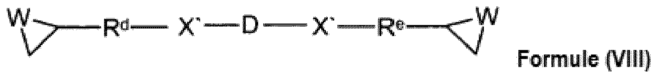 dans laquelle chaque résidu R^{d} et R^{e} représente, de manière respectivement indépendante, un groupe de liaison divalent qui comprend de 1 à 100 atomes de carbone, chaque résidu X' est choisi de manière respectivement indépendante parmi un atome d'oxygène, un atome de soufre, un groupe NH ou un groupe carboxyle répondant à la formule générale -(C=O)O-, l'atome de carbone du groupe carboxyle étant toujours lié au résidu D, W est choisi parmi un atome d'oxygène, un atome de soufre ou un groupe NH, et le résidu D comprend au moins un groupe aromatique,
avec cette mesure que la mise en réaction exclusive d'un ou de plusieurs composants qui répondent à la définition de (A-1) avec un ou plusieurs composants qui répondent à la définition de (B-2) et la mise en réaction exclusive d'un ou de plusieurs composants qui répondent à la définition de (A-2) avec un ou plusieurs composants qui répondent à la définition de (B-1) sont exclues.

10. Composition polymérisable selon la revendication 9, **caractérisée en ce que** le composé de polyéther oligomère ou polymère exempt de groupes uréthane présente au moins un groupe thiirane, aziridine et/ou oxirane terminal et/ou au moins un groupe thiol, amino et/ou hydroxyle terminal.

11. Composition polymérisable selon la revendication 9 et/ou 10, **caractérisée en ce que** le composant (A-1) est choisi parmi des composés répondant à la formule générale (VIa), 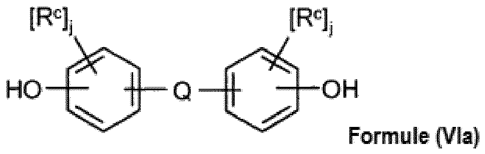 dans laquelle j représente un nombre de 0 à 4, R^{c} est choisi parmi un atome d'halogène, un groupe alkyle en C₁-C₄₀, un groupe alcényle en C₂-C₄₀, un groupe alcoxy en C₁-C₄₀ et un groupe aralkyle en C₇-C₁₃, et Q est choisi parmi le groupe constitué par un groupe alkylène, un atome d'oxygène, un atome de soufre, un groupe sulfoxyde, un groupe sulfone et une liaison covalente directe.

12. Composition polymérisable selon au moins une des revendications 9 à 11, **caractérisée en ce que** le composant (A-2) est choisi parmi des composés répondant à la formule générale (IX), 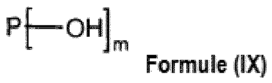 dans laquelle m représente un nombre de 2 à 100 et P représente un résidu d'oxyde de polyalkylène à valence m.

13. Composition polymérisable selon au moins une des revendications 9 à 12, **caractérisée en ce que** le composant (B-1) est choisi parmi des composés répondant à la formule générale (X), 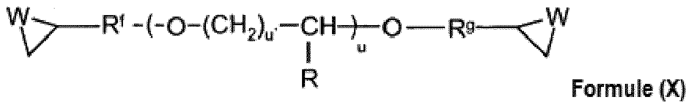 dans laquelle u représente un nombre de 2 à 5.000, chaque u' représente dans chaque unité de répétition de manière respectivement indépendante un nombre de 1 à 10, chaque R dans la formule (X) et dans chaque unité de répétition est choisi de manière respectivement indépendante parmi un atome d'hydrogène ou des groupes alkyle en C₁-C₁₂ linéaires ou ramifiés, facultativement substitués, chaque résidu R^{f} et R^{g} représente, de manière respectivement indépendante, un groupe de liaison divalent qui comprend de 1 à 100 atomes de carbone et W est choisi parmi un atome d'oxygène, un atome de soufre ou un groupe NH.

14. Composition polymérisable selon au moins une des revendications 1 à 13, **caractérisée en ce que** le composé de polyéther oligomère ou polymère exempt de groupes uréthane présente un poids moléculaire moyen en poids de 1.000 à 100.000 g/mol.

15. Produit de polymérisation de la composition polymérisable selon au moins une des revendications 1 à 14.

16. Produit de polymérisation selon la revendication 15, **caractérisé en ce que** le produit de polymérisation comprend une couche ou un faisceau de fibres, les fibres étant traitées avant leur durcissement avec une composition polymérisable selon au moins une des revendications 1 à 14.

17. Procédé pour la préparation d'un produit de polymérisation selon la revendication 16, comprenant les étapes dans lesquelles :
a) on procure une couche ou un faisceau de fibres ;
b) on procure une composition polymérisable selon au moins une des revendications 1 à 14 ;
c) on forme un système composite par traitement d'une couche ou d'un faisceau de fibres avec la composition polymérisable ;
d) de manière facultative, on élimine du système composite une quantité en excès de la composition polymérisable,
procédé dans lequel on obtient le produit de polymérisation mentionné en exposant le système composite à une température élevée.

18. Adhésif, substance d'étanchéité ou enduction comprenant une composition polymérisable selon au moins une des revendications 1 à 14.

19. Utilisation d'un ou de plusieurs composés de polyéthers oligomères ou polymères exempts de groupes uréthane, qui représentent un constituant d'une composition polymérisable selon au moins une des revendications 1 à 14 à titre d'agent de modification de la résistance aux chocs pour un produit de polymérisation qui contient au moins un composé de benzoxazine polymérisable sous forme polymérisée.
